(19) Europäisches Patentamt

European Patent Office

Office européen des brevets

(11) **EP 1 518 394 B1**

(12) **FASCICULE DE BREVET EUROPEEN**

(45) Date de publication et mention
de la délivrance du brevet:
**20.12.2006 Bulletin 2006/51**

(51) Int Cl.:
***H04M 9/08*** (2006.01)

(21) Numéro de dépôt: **03761624.0**

(22) Date de dépôt: **18.06.2003**

(86) Numéro de dépôt international:
**PCT/FR2003/001874**

(87) Numéro de publication internationale:
**WO 2004/004298 (08.01.2004 Gazette 2004/02)**

(54) **DISPOSITIFS DE TRAITEMENT D ECHO POUR SYSTEMES DE COMMUNICAT ION DE TYPE MONOVOIE OU MULTIVOIES**

ECHOVERARBEITUNGSEINRICHTUNGEN FÜR EINKANALIGE ODER MEHRKANALIGE KOMMUNIKATIONSSYSTEME

ECHO PROCESSING DEVICES FOR SINGLE-CHANNEL OR MULTICHANNEL COMMUNICATION SYSTEMS

(84) Etats contractants désignés:
**AT BE BG CH CY CZ DE DK EE ES FI FR GB GR HU IE IT LI LU MC NL PT RO SE SI SK TR**

(30) Priorité: **28.06.2002 FR 0208056**

(43) Date de publication de la demande:
**30.03.2005 Bulletin 2005/13**

(73) Titulaire: **FRANCE TELECOM**
**75015 Paris (FR)**

(72) Inventeurs:
• **AUVRAY, Monique**
**F-22300 Lannion (FR)**
• **LE TOURNEUR, Grégoire**
**F-22700 Saint-Quay-Perros (FR)**
• **THOMAS, Jean-Philippe**
**F-22660 Trevou Treguignec (FR)**

(56) Documents cités:
**FR-A- 2 738 695          FR-A- 2 748 184**
**US-B1- 6 246 760**

**Description**

La présente invention a trait au domaine des communications. Plus particulièrement l'invention concerne des dispositifs de traitement d'écho acoustique à gains variables et/ou par filtrage adaptatif, destiné à atténuer dans un signal de retour des composantes d'écho d'un signal direct. L'invention s'applique aux systèmes de communication de type monovoie comme aux systèmes de type multivoies.

L'écho acoustique existe principalement dans certains types de communications où le terminal d'un utilisateur distant se compose d'un (ou plusieurs) haut-parleur(s) se substituant à l'écouteur, et d'un (ou plusieurs) microphone(s) directif(s). Il s'agit par exemple d'équipements d'audioconférences ou de postes fonctionnant en "mains libres" tels que des téléphones mobiles. Son origine est simple : sans précautions particulières, le son émis par le haut-parleur subit des réflexions multiples (contre les murs, le plafond etc.) constituant autant d'échos différents, qui sont captés par le microphone au même titre que la parole utile. L'ensemble constitué du haut-parleur, du microphone, et de leur environnement physique constitue ainsi un système générateur d'écho.

Le problème de l'écho acoustique a fait l'objet de nombreuses études tant dans le cas monovoie (un seul microphone et un seul haut-parleur) que dans le cas multivoies (plusieurs microphones et plusieurs haut-parleurs). Le problème d'écho dans le cas multivoie est semblable à celui du cas monovoie, à la différence près qu'il faut prendre en considération tous les couplages acoustiques possibles entre les divers microphones et haut-parleurs.

Parmi les techniques de traitement d'écho les plus couramment utilisées, on trouve les techniques de suppression d'écho à variation de gains et les techniques d'annulation d'écho par filtrage adaptatif.

Dans un système de suppression d'écho à gains variables, un gain en réception est appliqué au signal (signal direct) qui doit être appliqué au haut-parleur (entrée du système générateur d'écho), et un gain en émission est appliqué au signal issu du microphone (sortie du système générateur d'écho) formant le signal de retour. Un tel système de suppression d'écho est décrit dans le document brevet français N° 2 748 184.

Typiquement, des détecteurs d'activité vocale en réception (DAVR) et en émission (DAVE), ainsi qu'un détecteur de double parole (DDP) fournissent les informations nécessaires aux modules calculant les gains en émission et en réception. Ainsi, lorsque le locuteur distant parle (détection par DAVR), le gain en émission est diminué afin d'atténuer l'écho. En cas de prise de parole par le locuteur local (détection par DAVE), cette contrainte sur le gain en émission est relâchée, et le gain en réception est diminué. En cas de double parole (les deux locuteurs parlent simultanément ; phénomène détecté par DDP), un comparateur détermine le locuteur dont le niveau est le plus élevé et privilégie son sens d'émission, ou bien, un réglage intermédiaire des gains en émission et en réception est établi.

Dans un système d'annulation d'écho par filtrage adaptatif (en anglais, *Acoustic Echo Canceler* - AEC), un filtre d'identification estime le couplage acoustique entre le haut-parleur et le microphone, et génère un signal qui est utilisé pour annuler l'écho. Le filtre d'identification est classiquement un filtre programmable à réponse impulsionnelle finie dont les coefficients doivent être adaptés, selon un algorithme prédéterminé de mise à jour des coefficients, utilisant un pas d'adaptation. Les coefficients sont adaptés sur la base du signal qui doit être appliqué au haut-parleur. Un tel système d'annulation d'écho est décrit dans le document brevet français N° 2 738 695.

Souvent, un système de suppression d'écho à gains variables est combiné au système d'annulation d'écho, de manière à supprimer le résidu d'écho qui persiste après l'annulation d'écho.

Cependant, les systèmes de traitement d'écho précités présentent l'inconvénient de ne pas pouvoir prendre en compte une variation du couplage acoustique entre le haut-parleur et le microphone lorsque cette variation est indépendante du signal qui est appliqué au haut-parleur.

C'est le cas, par exemple, lorsqu'il existe une possibilité de réglage extérieur du niveau sonore restitué par le haut-parleur (par exemple au moyen d'un potentiomètre). En effet, toute variation du niveau sonore restitué modifie le couplage acoustique entre le haut-parleur et le microphone, et donc l'écho capté par le microphone. Or, le système de traitement d'écho ne prenant en compte que le signal qui est appliqué au haut-parleur et non le signal sonore qui est effectivement restitué par ce dernier, il ne peut donc pas prendre en compte une telle modification du couplage acoustique dans son processus de calcul.

Ainsi, si le niveau de restitution sonore a été diminué alors que le système a été initialisé avec un réglage de niveau sonore maximal, dans le cas par exemple, d'un état double parole, il pourra se produire des coupures ou des troncatures dans la parole distante (émise par le haut-parleur).

De même, lorsque, dans le terminal de communication utilisé, le microphone et le haut-parleur sont physiquement indépendants l'un de l'autre, leur distance respective peut varier, ce qui entraîne une variation du couplage acoustique entre le haut-parleur et le microphone, avec les mêmes conséquences que celles exposées ci-dessus.

Dans le cas multivoies, le problème est le même mais généralisé au couplage existant entre les divers microphones et haut-parleurs.

La présente invention à pour but notamment de remédier aux inconvénients exposés ci-dessus des systèmes de traitement d'écho connus.

A cet effet, la présente invention concerne, selon un premier aspect, un dispositif de traitement d'écho pour atténuer dans un signal de retour Y2n des composantes d'écho d'un signal direct X1n, comprenant :

- des moyens de calcul de gains en réception et en émission $Gr_n$, $Ge_n$ ;
- des premiers moyens d'application de gain pour appliquer le gain en réception $Gr_n$ au signal direct et produire un signal d'entrée X2n émis dans un système générateur d'écho ;
- des seconds moyens d'application de gain pour appliquer le gain en émission $Ge_n$ à un signal de sortie Y1n issu du système générateur d'écho et produire le signal de retour Y2n.

Conformément à l'invention, ce dispositif de traitement d'écho est remarquable en ce qu'il comporte en outre des moyens de calcul d'une variable de couplage, COR, caractéristique du couplage acoustique existant entre le signal direct X1 n ou le signal d'entrée X2n, et le signal de sortie Y1 n ; et en ce que les moyens de calcul de gains sont aptes à calculer les gains en réception et en émission $Gr_n$, $Ge_n$ sur la base de la variable de couplage.

La prise en compte du couplage acoustique réel entre le haut-parleur et le microphone dans le pilotage de la variation des gains appliqués en réception et/ou en émission dans le dispositif, permet d'adapter automatiquement la qualité sonore du signal émis et du signal reçu en fonction des changements d'environnement acoustique du dispositif de traitement d'écho et de la position relative des transducteurs (haut-parleur, microphone), ainsi que, par exemple, en fonction du niveau de restitution sonore choisi par l'utilisateur.

Selon une caractéristique particulière de l'invention, le dispositif de traitement d'écho comporte des moyens d'estimation de la puissance instantanée du signal direct X1 n ou du signal d'entrée X2n, et de celle du signal de sortie Y1n. Les moyens de calcul de gains sont alors aptes à calculer les gains en réception et en émission $Gr_n$, $Ge_n$ sur la base d'une variable G déterminée en fonction des puissances estimées du signal direct ou du signal d'entrée, et du signal de sortie, et en fonction de la variable de couplage COR, selon l'équation suivante :

$$G = \frac{P2n}{P2n + COR \cdot P1n}$$

où P1n et P2n désignent respectivement une estimation à l'instant considéré de la puissance du signal direct X1 n ou du signal d'entrée X2n, et du signal de sortie Y1n.

Le terme "COR.P1n" dans l'expression de la variable G représente l'énergie du signal sonore effectivement capté par le microphone, donc prenant en compte tous les réglages externes (par ex. niveau de restitution sonore) "non vus" par le système. La variable G varie par conséquent de façon automatique en fonction des changements réels du couplage acoustique haut-parleur/microphone et de ce fait les gains en réception et en émission sont adaptés automatiquement.

Selon un second aspect, l'invention concerne un dispositif d'annulation d'écho pour atténuer dans un signal de sortie Y1n des composantes d'écho d'un signal d'entrée X2n émis dans un système générateur d'écho, comprenant :

- un filtre d'identification à réponse impulsionnelle finie représentative de la réponse du système générateur d'écho, recevant en entrée le signal d'entrée X2n et générant un signal de filtrage Sn ;
- des moyens de soustraction recevant en entrée, d'une part, un signal Y3n issu du système générateur d'écho, dont au moins une composante est une réponse du système générateur d'écho au signal d'entrée X2n, et d'autre part le signal de filtrage Sn, pour soustraire du signal Y3n le signal de filtrage Sn, et produire le signal de sortie Y1 n ;
- des moyens d'adaptation des coefficients du filtre d'identification en fonction d'un pas d'adaptation $\mu_n$ ;
- des moyens de calcul du pas d'adaptation $\mu_n$.

Ce dispositif est remarquable en ce que les moyens de calcul du pas d'adaptation comprennent des moyens d'estimation de la puissance, P1n, du signal d'entrée X2n, et de celle, P3n, du signal Y3n, et des moyens de calcul d'une première variable de couplage, COR2, caractéristique du couplage acoustique existant entre le signal d'entrée X2n, et le signal Y3n issu du système générateur d'écho ; le pas d'adaptation $\mu_n$ du filtre d'identification étant calculé en fonction des puissances estimées P1n, P3n, et en fonction de la première variable de couplage COR2.

L'évaluation de la variable de couplage COR2 précitée, permet ainsi de "piloter" le pas d'adaptation du filtre en fonction du couplage acoustique réel existant entre le signal d'entrée et le signal de sortie du système générateur d'écho. Cela permet d'améliorer la réactivité du dispositif d'annulation d'écho en fonction de changements dans l'environnement acoustique du dispositif, et donc d'améliorer le résultat du traitement de l'écho.

Selon une mode de réalisation préféré, le pas d'adaptation $\mu_n$ est obtenu selon l'équation suivante :

$$\mu_n = \frac{P1n}{\alpha \cdot P1n + COR2.P3n}$$

où $\alpha$ est une constante positive, et, P1 n et P3n désignent respectivement une estimation à l'instant considéré de la puissance du signal d'entrée X2n, et de celle du signal Y3n issu du système générateur d'écho.

Selon une variante de réalisation, les moyens de calcul du pas d'adaptation comprennent en outre des moyens de calcul d'une seconde variable de couplage, COR, caractéristique du couplage acoustique entre le signal d'entrée X2n du système générateur d'écho et le signal de sortie Y1 n, la seconde variable de couplage COR étant obtenue par un calcul de corrélation entre les signaux d'entrée X2n et de sortie Y1 n ; le pas d'adaptation $\mu_n$ du filtre d'identification étant en outre calculé en fonction de la seconde variable de couplage COR.

Par la prise en compte additionnelle de la seconde variable de couplage (COR), il est possible de connaître l'état de convergence du filtre d'identification et de contrôler ainsi plus finement le pas d'adaptation.

Selon un troisième aspect, l'invention concerne un dispositif de traitement d'écho pour système de communication multivoies comprenant une pluralité N de voies de réception, N étant un entier supérieur ou égal à 2, et une pluralité M de voies d'émission, M étant un entier supérieur ou égal à 1 ; chacune, i, des N voies de réception comprenant un transducteur de sortie (HPi) qui produit une onde de pression sonore en réponse à un signal d'entrée X2n(i) issu d'un signal direct X1n(i) ; chacune, j, des M voies d'émission comprenant un transducteur d'entrée (MCj) qui convertit une onde de pression sonore en un signal de sortie Y1n(j). Le dispositif de traitement d'écho est destiné à atténuer dans chaque signal de sortie Y1n(j) des composantes d'écho provenant de tout ou partie des N signaux d'entrée X2n(i), et résultant du couplage acoustique existant entre le transducteur d'entrée de la voie d'émission considérée et tout ou partie des M transducteurs de sortie.

Conformément à l'invention, ce dispositif est remarquable en ce qu'il comporte :

- des moyens de calcul de gains en réception $Gr_n(i)$ et de gains en émission $Ge_n(j)$ ;
- des moyens d'application de gains en réception pour appliquer un gain en réception $Gr_n(i)$ à chaque signal direct X1n(i) et produire le signal d'entrée X2n(i) correspondant ;
- des moyens d'application de gains en émission pour appliquer un gain en émission $Ge_n(j)$ à chaque signal de sortie Y1n(j) et produire un signal de retour Y2n(j) correspondant ;
- des moyens de calcul, pour chaque voie d'émission j, de N variables de couplage COR(j,i), i variant de 1 à N, chacune desquelles étant caractéristique du couplage acoustique existant entre le signal de sortie Y1n(j) de la voie d'émission et un des N signaux d'entrée X2n(i) ;

les moyens de calcul de gains étant aptes à calculer chaque gain en réception $Gr_n(i)$ et chaque gain en émission $Ge_n(j)$ sur la base des N variables de couplage COR(j,i) calculées pour la voie d'émission j associée.

Les avantages relatifs à ce mode de calcul de gains en ce qui concerne un couple donné (i,j) de voies de réception et d'émission, sont de même nature que ceux obtenus avec un dispositif monovoie à gains variables selon l'invention, tel que brièvement exposé plus haut.

Selon un mode de réalisation préféré de l'invention, le dispositif de traitement d'écho comporte des moyens d'estimation de la puissance instantanée, $P1n_i$, de chaque signal d'entrée X2n(i), et de celle, $P2n_j$, de chaque signal de sortie Y1n(j), les moyens de calcul de gains en émission étant aptes à calculer chaque gain en émission $Ge_n(j)$ sur la base de N variables G(j, i), i variant de 1 à N, chacune desquelles étant déterminée en fonction des puissances estimées d'un signal d'entrée X2n(i), et du signal de sortie Y1n(j) de la voie d'émission considérée, et en fonction de la variable de couplage COR(j, i) correspondante, chacune des variables G(j,i) étant obtenue selon l'équation suivante :

$$G(j,i) = \frac{P2n_j}{P2n_j + COR(j,i) \cdot P1n_i}$$

où $P1n_i$ et $P2n_j$ désignent respectivement une estimation à l'instant considéré de la puissance du signal d'entrée X2n (i), et du signal de sortie Y1n(j) considérés.

Selon un quatrième aspect, l'invention concerne un dispositif d'annulation d'écho pour système de communication multivoies comprenant une pluralité N de voies de réception, N étant un entier supérieur ou égal à 2, et une pluralité M de voies d'émission, M étant un entier supérieur ou égal à 1 ; chacune, i, des N voies de réception comprenant un transducteur de sortie (HPi) qui produit une onde de pression sonore en réponse à un signal d'entrée X2n(i) ; chacune, j, des M voies d'émission comprenant un transducteur d'entrée (MCj) qui convertit une onde de pression sonore en un signal de sortie Y1n(j) ; le dispositif comprenant :

- pour chaque voie d'émission j, N filtres d'identification Fij à coefficients variables pour estimer le couplage acoustique entre chacun des N transducteurs de sortie (HPi) et le transducteur d'entrée (MCj) de la voie d'émission j, et
- pour chaque filtre Fij, des moyens d'adaptation des coefficients du filtre en fonction d'un pas d'adaptation $\mu_n(1,j)$, et des moyens de calcul du pas d'adaptation $\mu_n(i,j)$.

Conformément à l'invention, ce dispositif est remarquable en ce qu'il comporte :

- des moyens d'estimation de la puissance instantanée $P1n_i$ de chaque signal d'entrée X2n(i), et de celle $P2n_j$ de chaque signal de sortie Y1n(j) ;
- des moyens de calcul, pour chaque voie d'émission j, de N variables de couplage COR(j,i), i variant de 1 à N, chacune desquelles étant caractéristique du couplage acoustique existant entre le signal de sortie Y1n(j) de la voie d'émission et un des N signaux d'entrée X2n(i) ;

les moyens de calcul du pas d'adaptation $\mu_n(i,j)$ pour un filtre Fij associé à une voie de réception i et à une voie d'émission j étant aptes à calculer le pas d'adaptation $\mu_n(i,j)$ en fonction des puissances estimées $P1n_i$, i variant de 1 à N, pour les N voies de réception, de la puissance $P2n_j$ estimée pour la voie d'émission j, et en fonction des N variables de couplage COR(j, i), i variant de 1 à N, associées à la voie d'émission j.

Selon un mode de réalisation préféré, un pas d'adaptation $\mu_n(i, j)$ pour un filtre Fij associé à une voie de réception i et à une voie d'émission j, est obtenu selon l'équation suivante :

$$\mu_n(i,j) = \frac{P1n_i}{b_i \cdot P1n_i + COR(j,i) \cdot P2n_j + \sum_{k \neq i} COR(j,k) \cdot P1n_k}$$

où $b_i$ est une constante positive.

D'autres particularités et avantages de l'invention apparaîtront encore dans la description ci-après de modes préférés de réalisation, faite à l'appui des dessins annexés, sur lesquels

- la figure 1 est un schéma-bloc d'un dispositif de traitement d'écho monovoie à gains variables, selon un premier mode de réalisation de l'invention ;
- la figure 2 est un schéma-bloc d'un dispositif de traitement d'écho monovoie selon un second mode de réalisation de l'invention, le dispositif combinant un système à gains variables et un système d'annulation d'écho ;
- la figure 3 est un schéma-bloc d'un dispositif d'annulation d'écho monovoie selon un troisième mode de réalisation de l'invention ;
- la figure 4 est un schéma-bloc d'un dispositif d'annulation d'écho monovoie selon un quatrième mode de réalisation de l'invention ;
- la figure 5 est un schéma-bloc d'un dispositif de traitement d'écho monovoie selon l'invention combinant les premier et quatrième modes de réalisation de l'invention ;
- la figure 6 est un schéma-bloc d'un dispositif de traitement d'écho multivoies à gains variables selon un cinquième mode de réalisation de l'invention ; et
- la figure 7 est un schéma-bloc d'un dispositif d'annulation d'écho multivoies selon un sixième mode de réalisation de l'invention.

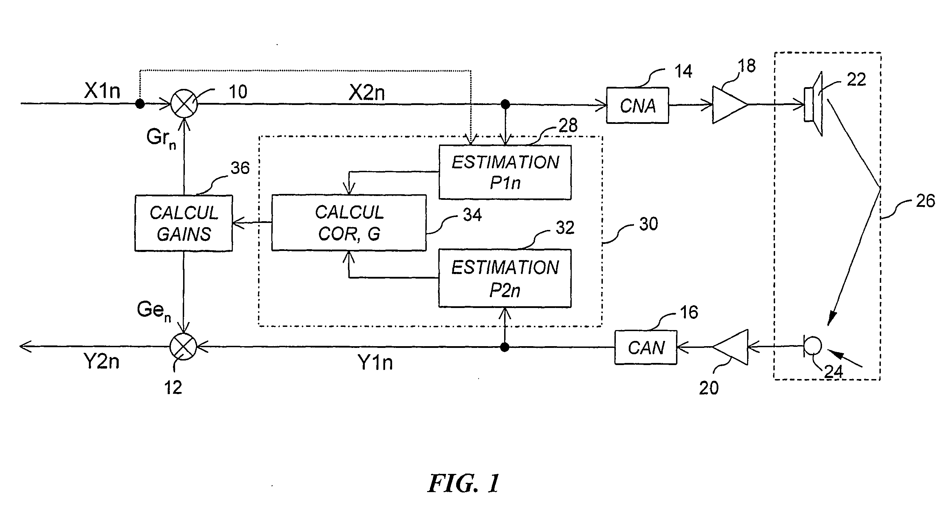

La **figure 1** montre un dispositif de traitement d'écho monovoie à gains variables, selon un premier mode de réalisation de l'invention. Ce dispositif est intégré par exemple dans un poste téléphonique mains libres.

Comme représenté à la figure 1, ce dispositif reçoit et émet des signaux numériques X1 n, Y2n appelés respectivement signal direct et signal de retour.

Le dispositif de traitement d'écho comporte un module 36 de calcul de gains en réception ($Gr_n$) et en émission ($Ge_n$). Le gain en réception $Gr_n$ est appliqué au signal direct X1n au moyen d'un multiplieur 10 afin d'obtenir un signal d'entrée X2n émis dans un système générateur d'écho 26.

De même, le gain en émission $Ge_n$ est appliqué à un signal de sortie Y1 n issu du système générateur d'écho, au moyen d'un multiplieur 12 afin de produire le signal de retour Y2n.

Le signal d'entrée X2n est délivré à un haut-parleur 22 via un convertisseur numérique analogique (CNA) 14 et un amplificateur 18. L'amplificateur 18 est typiquement à gain variable, de sorte qu'un utilisateur du dispositif puisse régler à sa convenance le volume du son délivré par le haut-parleur 22.

De manière similaire, le signal de sortie Y1n est obtenu à partir d'un microphone 24, via un amplificateur 20 et un convertisseur analogique numérique (CAN) 16.

Dans l'exemple représenté, le dispositif comporte un seul haut-parleur 22 et un seul microphone 24 faisant partie du système 26 générateur d'écho. Cependant, le dispositif de l'invention représenté à la figure 1 s'applique également à un système dans lequel le signal d'entrée X2n est émis dans le système générateur d'écho au moyen de plusieurs haut-parleurs (22) diffusant le même signal sonore, et dans lequel le signal de sortie Y1n est obtenu à partir du système générateur d'écho par l'intermédiaire de plusieurs microphones (24).

Conformément à l'invention, le dispositif de traitement d'écho comporte un module 30 de calcul d'une variable de couplage, désignée ici par "COR", caractéristique du couplage acoustique existant entre le signal direct X1n ou le signal d'entrée X2n, et le signal de sortie Y1n.

A cet effet, le module de calcul 30 comprend une unité de calcul 34. La variable de couplage COR est calculée par l'unité 34 puis utilisée par le module 36 de calcul de gains, pour calculer les gains en réception et en émission $Gr_n$, $Ge_n$.

Selon le mode de réalisation représenté sur la fig. 1, le module 30 de calcul de la variable de couplage (COR) comprend une unité 28 d'estimation de la puissance instantanée (P1n) du signal d'entrée X2n et/ou du signal direct X1n, et une unité d'estimation de celle (P2n) du signal de sortie Y1n.

Dans ce mode de réalisation, le module 36 de calcul de gains est conçu pour calculer les gains en réception et en émission $Gr_n$, $Ge_n$ sur la base d'une variable G calculée, par l'unité de calcul 34, en fonction d'une part, de la puissance estimée P1n du signal direct et/ou du signal d'entrée, et de la puissance estimée P2n du signal de sortie, et, d'autre part, en fonction de la variable de couplage COR.

Selon un mode de réalisation préféré de l'invention, la variable G est déterminée par l'unité 34 de calcul selon l'équation suivante :

$$G = \frac{P2n}{P2n + COR \cdot P1n} \qquad\qquad (1)$$

où P1n et P2n désignent respectivement une estimation à l'instant considéré de la puissance du signal direct X1n ou du signal d'entrée X2n, et du signal de sortie Y1n.

Ainsi, un niveau de corrélation important (couplage fort) entre le signal direct X1n ou le signal d'entrée X2n, et le signal de sortie Y1n, conduira à une valeur faible de la variable G de manière à supprimer l'écho, alors qu'un couplage faible aura l'effet inverse sur la variable G.

Selon une implémentation préférée de l'invention, les gains en réception $Gr_n$ et en émission $Ge_n$ sont alors déterminés de façon récursive par le module 36 de calcul de gains, selon les équations suivantes :

$$Ge_n = \gamma \cdot Ge_{n-1} + (1-\gamma) \cdot G$$
$$Gr_n = 1 - \delta \cdot Ge_n \qquad\qquad (2)$$

où $Ge_{n-1}$ désigne la valeur du gain en émission à l'instant de calcul précédent, et $\gamma$ et $\delta$ désignent des constantes positives inférieures à 1.

Le calcul de gains ci-dessus (équation (2)), donné à titre d'exemple de réalisation, dérive d'un mode de calcul exposé dans le document brevet N° 2 748 184, modifié conformément à l'invention par la prise en compte dans celui-ci de la variable G définie plus haut (équation (1)).

Selon une implémentation particulière, de bons résultats ont été obtenus avec $\gamma$ égal à 0,95 pour un calcul effectué à la fréquence de 8 kiloHertz (kHz).

Avec le mode de calcul ci-dessus, les gains en réception et en émission sont directement liés à la variable G, ce qui permet de traiter l'écho de manière adaptative en fonction des caractéristiques réelles du système générateur d'écho. En outre, la plage de variation du gain en émission $Ge_n$ est une fonction décroissante de la variable G, ce qui permet d'améliorer automatiquement, par une augmentation du gain, la qualité sonore perçue par le locuteur distant, lorsque la composante d'écho du signal capté par le microphone diminue.

Par ailleurs, on notera que ces avantages ont été obtenus sans recourir à des détecteurs d'activité vocale ou de double parole, qui sont des éléments complexes et de fiabilité parfois insuffisante dans les dispositifs de traitement d'écho connus.

Calcul de la variable de couplage (COR)

Conformément à l'invention, la variable de couplage COR - qui caractérise le couplage acoustique existant entre le signal direct X1n (ou le signal d'entrée X2n), et le signal de sortie Y1n - est obtenue à partir d'un calcul de corrélation entre le signal direct X1n (ou le signal d'entrée X2n), et le signal de sortie Y1 n.

On peut par exemple utiliser un calcul de corrélation d'enveloppes. Ainsi selon un mode de réalisation particulier, la variable de couplage COR est définie comme étant une fonction de la valeur maximale, Maxcor, de valeurs de corrélation corr(j) entre le signal direct X1n ou le signal d'entrée X2n, et le signal de sortie Y1n. Les valeurs de corrélation corr(j) sont calculées sur une fenêtre temporelle considérée, chacune d'entre elles étant obtenue selon l'équation suivante :

$$corr(j) = \frac{\sum_{i=0}^{LM-1} P1(i) \cdot P2(i+j)}{\sum_{i=0}^{LM-1} P1^2(i)} \qquad (3)$$

où : i représente un instant d'échantillonnage dans la fenêtre temporelle de calcul de durée LM, j représente une valeur de décalage entre les signaux d'entrée X2n et de sortie Y1n ; et P1(t) et P2(t) représentent respectivement une estimation à un instant t considéré de la puissance du signal direct X1 n ou du signal d'entrée X2n, et du signal de sortie Y1 n.

En pratique, le calcul de corrélation d'enveloppes est effectué sur des fenêtres temporelles de 1 seconde pour chaque signal (entrée et sortie), et un décalage maximal de 300 millisecondes entre les signaux. Le calcul est effectué à une fréquence d'échantillonnage réduite de 125 Hertz.

Dans ce mode de réalisation, on obtient de très bons résultats avec la variable COR définie selon l'équation suivante :

$$COR = Exp(k.Maxcor) \qquad (4)$$

où Exp désigne la fonction exponentielle, et k est une constante positive.

En pratique, de très bons résultats ont été obtenus avec k égal à 3. Par ailleurs il est conseillé de limiter le terme *Exp*(3.*Maxcor)* à 25, ce qui correspond à une corrélation maximum de 1,07.

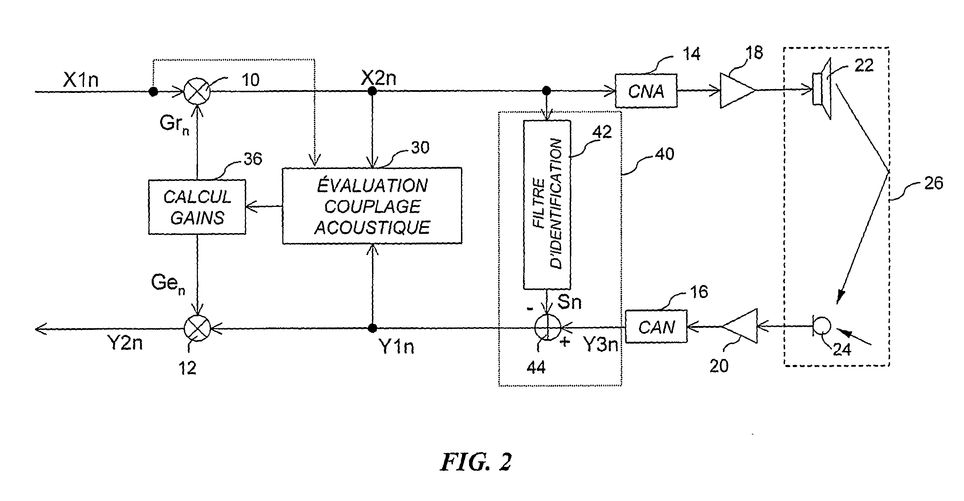

En liaison avec la **figure 2** on va décrire un dispositif de traitement d'écho monovoie selon un second mode de réalisation de l'invention. Ce dispositif combine un système à gains variables, tel que décrit ci-dessus en référence à la figure1, et un système d'annulation d'écho.

Le dispositif de traitement d'écho représenté à la figure 2, comporte comme celui représenté à la figure 1, un module 36 de calcul de gains en réception ($Gr_n$) et en émission ($Ge_n$), et un module 30 d'évaluation, au travers de la détermination de la variable COR, du couplage acoustique existant entre le signal direct X1 n ou le signal d'entrée X2n, et le signal de sortie Y1n. Les caractéristiques et le fonctionnement des modules 30 et 36 de la figure 2 est identique à ceux de la figure 1.

Conformément à l'invention ce dispositif peut inclure en outre un dispositif d'annulation d'écho 40 recevant en entrée, d'une part, le signal d'entrée X2n émis dans le système générateur d'écho 26, et d'autre part, un signal Y3n issu du système générateur d'écho 26. Le système d'annulation d'écho 40 comprend, de manière classique, un filtre d'identification 42 à réponse impulsionnelle finie représentative de la réponse du système générateur d'écho (26).

En fonctionnement, le filtre d'identification 42 produit un signal de filtrage Sn, et soustrait, au moyen d'un soustracteur 44, le signal de filtrage Sn du signal Y3n. Il produit alors le signal de sortie Y1 n qui est reçu en entrée par le multiplieur 12 afin de lui appliquer un gain en émission $Ge_n$, calculé par le module 36.

Dans ce mode de réalisation, le système est initialisé avec l'annuleur d'écho 40 inactif (il n'a pas encore convergé) de manière à garantir la stabilité sans Larsen. Ensuite, lorsque le filtre d'identification 42 a convergé, une évaluation du couplage (variable COR) est effectuée, de manière non intrusive, par le module 30. Le calcul de corrélation est mesuré dans ce mode de réalisation, entre le signal direct X1n ou le signal d'entrée X2n, et le signal Y1n qui est ici le signal "résidu" issu de l'annuleur d'écho (40). Ensuite, le couplage acoustique est évalué de manière cyclique de façon à adapter automatiquement la valeur des gains en émission et en réception en fonction des variations du couplage acoustique.

Dans ce mode de réalisation, on cumule les effets d'un dispositif d'annulation d'écho (40) classique, avec un dispositif de traitement d'écho à gains variables (fig. 1) conforme à l'invention, pour obtenir un traitement optimal de l'écho.

En pratique, dans ce mode de réalisation, on obtient de très bons résultats avec la variable COR, fonction de Maxcor (cf. définition supra), définie comme suit :

$$COR = 0,75 \cdot Exp(Maxcor) \qquad (5)$$

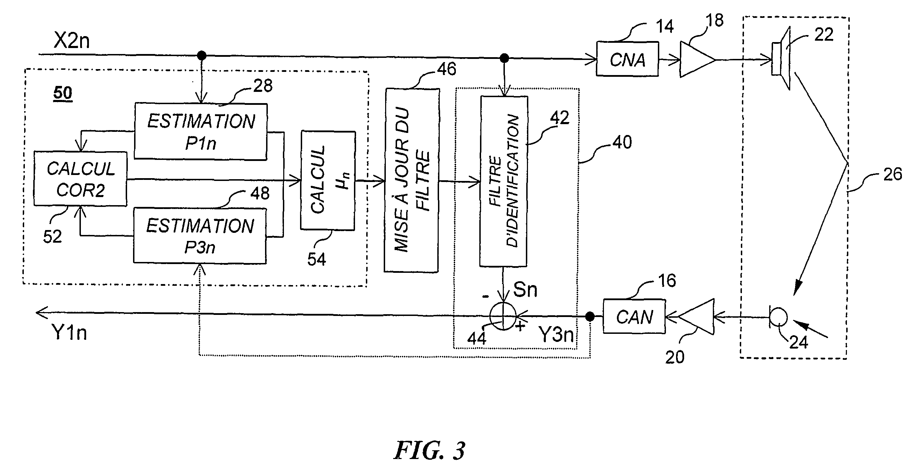

En liaison avec la **figure 3**, on va à présent décrire un dispositif d'annulation d'écho monovoie, selon un troisième mode de réalisation de l'invention. Dans ce mode de réalisation, le principe de l'estimation du couplage acoustique entre des signaux d'entrée et de sortie d'un système générateur d'écho, avec calcul de variable de couplage (COR) tel que décrit supra, est appliqué au calcul du pas d'adaptation du filtre d'un dispositif d'annulation d'écho.

Comme représenté à la figure 3, un dispositif d'annulation d'écho selon l'invention comprend classiquement un filtre d'identification 42 à réponse impulsionnelle finie représentative de la réponse du système générateur d'écho 26. Le système générateur d'écho est constitué par l'ensemble formé du haut-parleur 22, du microphone 24, et de leur environnement physique (murs, bruit de fond, etc.).

Le filtre 42 reçoit entrée un signal d'entrée X2n qui est émis dans le système générateur d'écho 26 (via un CNA 14 et un amplificateur 18), et génère un signal de filtrage Sn.

Le dispositif d'annulation d'écho comprend un soustracteur 44 qui reçoit en entrée, d'une part un signal Y3n issu du système générateur d'écho (via un amplificateur 20 et un CAN 16). Par conséquent, au moins une composante du signal Y3n est une réponse du système générateur d'écho au signal d'entrée X2n.

D'autre part, le soustracteur 44 reçoit en entrée le signal de filtrage Sn, et soustrait ainsi le signal de filtrage Sn du signal Y3n pour produire un signal de sortie Y1 n.

Le dispositif d'annulation d'écho comprend un module de mise à jour 46 des coefficients du filtre d'identification en fonction d'un pas d'adaptation $\mu_n$. Il comprend enfin un module de calcul 50 du pas d'adaptation $\mu_n$.

Le module 50 de calcul du pas d'adaptation du filtre comprend des unités 28, 48 d'estimation de la puissance, P1n, du signal d'entrée X2n, et de celle, P3n, du signal Y3n.

Le module 50 comporte en outre une unité 52 de calcul d'une variable de couplage, COR2, caractéristique du couplage acoustique existant entre le signal d'entrée X2n, et le signal Y3n issu du système générateur d'écho (26).

Le module 50 comporte enfin une unité 54 de calcul du pas. Conformément à la présente invention, le pas d'adaptation $\mu_n$ du filtre d'identification est calculé en fonction des puissances estimées P1 n, P3n, et en fonction de la variable de couplage COR2.

Selon un mode de réalisation préféré de l'invention, le pas d'adaptation $\mu_n$ est obtenu selon l'équation suivante :

$$\mu_n = \frac{P1n}{\alpha \cdot P1n + COR2.P3n} \qquad (6)$$

où $\alpha$ est une constante positive, et, P1 n et P3n désignent respectivement une estimation à l'instant considéré de la puissance du signal d'entrée X2n, et de celle du signal Y3n issu du système générateur d'écho.

L'évaluation de la variable de couplage COR2 précitée, permet ainsi de "piloter" le pas d'adaptation du filtre en fonction du couplage acoustique réel existant entre le signal d'entrée et le signal de sortie du système générateur d'écho. Cela permet d'améliorer la réactivité du dispositif d'annulation d'écho en fonction de changements dans l'environnement acoustique du dispositif - par exemple, suite à une variation du volume de restitution sonore réglé par l'utilisateur du dispositif, ou une utilisation du dispositif dans un environnement bruité (rue, voiture,...) - et donc, d'améliorer le résultat du traitement de l'écho.

Selon le même principe que pour la variable COR définie plus haut en liaison avec la figure 1, la variable de couplage COR2 est obtenue à partir d'un calcul de corrélation entre le signal d'entrée X2n et le signal Y3n. En pratique, il s'agit également d'un calcul de corrélation d'enveloppes. Dans une implémentation préférée, la variable de couplage COR2 est définie comme étant une fonction de la valeur maximale, désignée par "Maxcor2", des valeurs de corrélation, désignées par "corr2(j)", calculées sur une fenêtre temporelle considérée. Chacune des valeurs de corrélation corr2(j) est calculée selon l'équation suivante :

$$corr2(j) = \frac{\sum\limits_{i=0}^{LM-1} P1(i) \cdot P3(i+j)}{\sum\limits_{i=0}^{LM-1} P1^2(i)} \qquad (7)$$

où :

i représente un instant d'échantillonnage dans la fenêtre temporelle de calcul de durée LM, j représente une valeur de décalage entre le signal d'entrée X2n et le signal Y3n ; et

P1(t) et P3(t) représentent respectivement une estimation à un instant t considéré de la puissance du signal d'entrée X2n, et de celle du signal Y3n.

Dans ce mode de réalisation, on obtient de très bons résultats avec la variable COR2 définie selon l'équation suivante :

$$COR2 = \frac{k}{Maxcor2} \qquad (8)$$

où k est une constante positive.

Selon un quatrième mode de réalisation de l'invention, le dispositif d'annulation d'écho monovoie décrit ci-dessus peut être complété par un module de calcul d'une seconde variable de couplage, désignée par COR (par analogie avec celle de la fig. 1), caractéristique du couplage acoustique entre le signal d'entrée X2n du système générateur d'écho, et le signal de sortie Y1n issu du soustracteur 44 de l'annuleur d'écho.

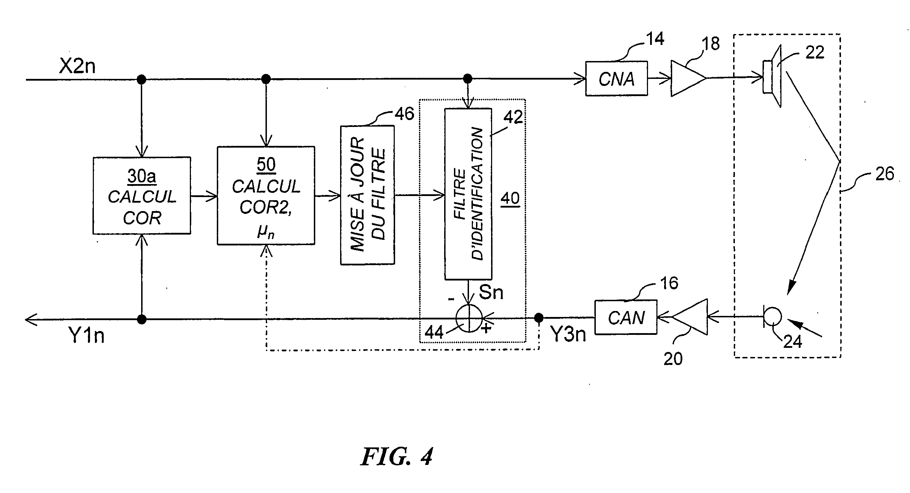

La **figure 4 représente un dispositif d'annulation d'écho conforme à ce quatrième mode** de réalisation. Comme représenté à la figure 4, le dispositif d'annulation d'écho comporte un module de calcul 50 du pas d'adaptation $\mu_n$ de structure similaire à celui décrit en liaison avec la figure 3. Le dispositif comporte en outre une unité 30a de calcul d'une seconde variable de couplage, COR.

La variable COR est caractéristique du couplage acoustique entre le signal d'entrée X2n du système générateur d'écho 26 et le signal de sortie Y1 n. La seconde variable de couplage COR est obtenue par un calcul de corrélation entre les signaux d'entrée X2n et de sortie Y1n.

La structure de l'unité 30a de calcul est similaire à l'unité 30 décrite plus haut en référence à la figure 1.

Dans le cadre du mode de réalisation illustré en liaison avec la figure 4, la seconde variable COR est obtenue selon le même principe que pour la variable COR définie plus haut en liaison à la figure 1, c'est-à-dire selon un calcul de corrélation d'enveloppes entre les signaux d'entrée X2n et de sortie Y1 n. En particulier, la variable COR est définie comme étant une fonction de la valeur maximale, Maxcor, de valeurs de corrélation corr(j) entre le signal d'entrée X2n et le signal de sortie Y1 n.

La seconde variable de couplage COR calculée par l'unité 30a est fournie à l'unité 54 (voir fig. 3) de calcul du pas d'adaptation du filtre, de sorte que le pas d'adaptation $\mu_n$ est en outre calculé en fonction de la seconde variable de couplage COR.

En pratique, le pas d'adaptation $\mu_n$ est calculé selon l'équation suivante :

$$\mu_n = \frac{COR}{COR2} \cdot \frac{P1n}{\alpha.P1n + COR2 \cdot P3n} \qquad (9)$$

où $\alpha$ est une constante positive, et, P1 n et P3n désignent respectivement une estimation à l'instant considéré de la puissance du signal d'entrée X2n, et de celle du signal Y3n issu du système générateur d'écho.

Dans le mode de réalisation dans lequel la variable COR est une fonction prédéterminée, f, de la variable Maxcor, et la variable COR2 est une fonction prédéterminée, g, de la variable Maxcor2 (voir définition plus haut), l'équation (9) ci-dessus peut donc être exprimée sous la forme suivante :

$$\mu_n = \frac{f(Maxcor)}{g(Maxcor2)} \cdot \frac{P1n}{\alpha.P1n + COR2 \cdot P3n} \qquad (9a)$$

Par la prise en compte additionnelle de la seconde variable de couplage (COR), il est possible de connaître l'état de convergence du filtre d'identification et de contrôler ainsi plus finement le pas d'adaptation.

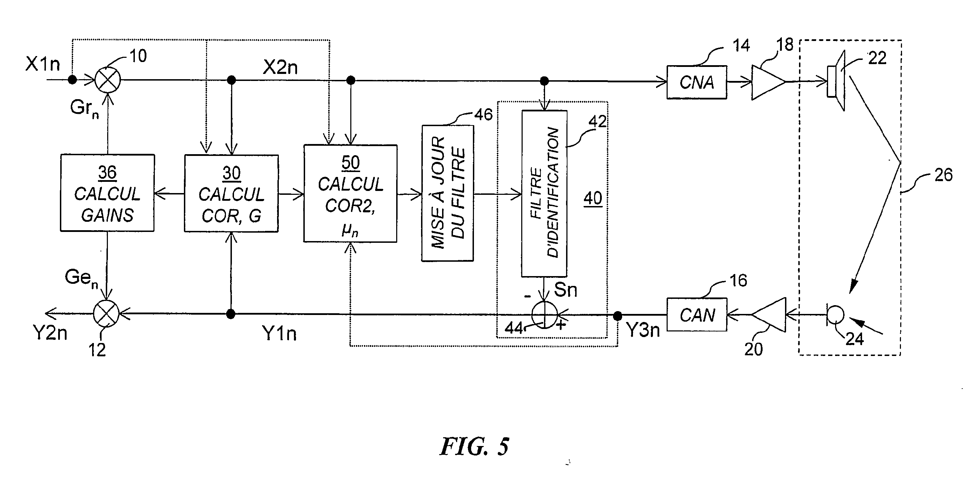

Selon un autre mode de réalisation de l'invention, on peut combiner le dispositif de traitement d'écho décrit plus haut en liaison avec la figure 1 et celui décrit ci-dessus en liaison avec la figure 4. Un tel dispositif est illustré par la **figure 5.**

Sur la figure 5, les éléments référencés 10, 12, 36, 30 sont identiques à celles représentés à la figure 1 et constituent un dispositif selon l''invention de traitement d'écho monovoie à gains variables. D'autre part, les éléments 50, 46, 40 sont identiques à ceux du dispositif d'annulation d'écho représenté à la figure 4. Lorsque les blocs 30 et 50 sont adaptés de telle sorte que le bloc 30 puisse délivrer la variable COR au bloc 50 et ce dernier puisse calculer le pas d'adaptation du filtre 42 en fonction des variables COR, COR2 comme exposé supra, on obtient alors une combinaison des systèmes décrits en liaison avec les figures 1 et 4, permettant de cumuler les avantages procurés par chacun des deux systèmes.

La présente invention s'applique aussi à des dispositifs de traitement d'écho destinés à un système de communication multivoies.

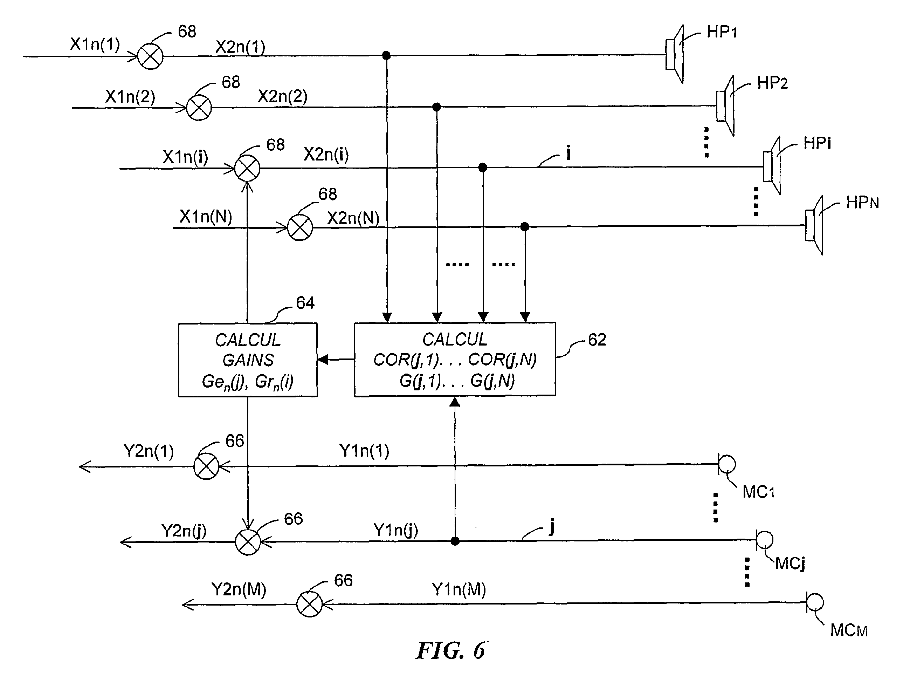

Ainsi, en référence à la **figure 6**, on va maintenant décrire un dispositif de traitement d'écho multivoies à gains variables, selon un cinquième mode de réalisation de l'invention.

Comme représenté à la figure 6, un dispositif de traitement d'écho multivoies à gains variables selon l'invention, est destiné à être utilisé pour un système de communication multivoies comprenant une pluralité N de voies de réception, N étant un entier supérieur ou égal à 2, et une pluralité M de voies d'émission, M étant un entier supérieur ou égal à 1.

Chacune, i, des N voies de réception comprend un transducteur de sortie HPi, typiquement un haut-parleur, qui produit une onde de pression sonore en réponse à un signal d'entrée X2n(i) issu d'un signal direct X1n(i).

Chacune, j, des M voies d'émission comprend un transducteur d'entrée MCj, typiquement un microphone, qui convertit une onde de pression sonore en un signal de sortie Y1n(j).

Un tel dispositif de traitement d'écho est destiné à atténuer dans chaque signal de sortie Y1n(j) des composantes d'écho provenant de tout ou partie des N signaux d'entrée X2n(i), et résultant du couplage acoustique existant entre le microphone de la voie d'émission considérée et tout ou partie des N haut-parleurs.

Comme représenté sur la figure 6, un dispositif de traitement d'écho multivoies à gains variables selon l'invention, comprend un module 64 de calcul de gains en réception $Gr_n(i)$ et de gains en émission $Ge_n(j)$.

Il comprend en outre N multiplieurs 68 destinés à appliquer un gain en réception $Gr_n(i)$ à chaque signal direct X1n(i) et produire le signal d'entrée X2n(i) correspondant.

De façon similaire, le dispositif comprend des multiplieurs 66 pour appliquer un gain en émission $Ge_n(j)$ à chaque signal de sortie Y1n(j) et produire un signal de retour Y2n(j) correspondant.

Il comprend d'autre part, un module de calcul 62 chargé de calculer, pour chaque voie d'émission j, N variables de couplage COR(j,i), i variant de 1 à N, chacune des N variables étant caractéristique du couplage acoustique existant entre le signal de sortie Y1n(j) de la voie d'émission j considérée et un des N signaux d'entrée X2n(i).

Conformément à l'invention, le module 64 de calcul de gains calcule chaque gain en réception $Gr_n(i)$, et chaque gain en émission $Ge_n(j)$ sur la base des N variables de couplage COR(j,i) calculées pour la voie d'émission j associée.

Les avantages relatifs à ce mode de calcul de gains en ce qui concerne un couple donné (i,j) de voies de réception et d'émission, sont de même nature que ceux obtenus avec un dispositif monovoie à gains variables selon l'invention, décrit plus haut en liaison avec la figure 1.

Par ailleurs, selon un mode de réalisation préféré, le dispositif de traitement d'écho multivoies représenté à la figure 6, comprend un module de calcul de puissance (non représenté) apte à estimer la puissance instantanée, $P1n_i$, de chaque signal d'entrée X2n(i), et de celle, $P2n_j$, de chaque signal de sortie Y1n(j).

Dans ce mode de réalisation, chaque module 62 de calcul de variables de corrélation (COR) calcule en outre N variables G(j, i), i variant de 1 à N, chacune desquelles étant déterminée en fonction de la puissance estimée $P1n_i$ d'un signal d'entrée X2n(i), et de celle $P2n_j$ du signal de sortie Y1n(j) de la voie d'émission considérée. Selon l'invention chacune des variables G(j,i) est obtenue selon l'équation suivante :

$$G(j,i) = \frac{P2n_j}{P2n_j + COR(j,i) \cdot P1n_i} \qquad (10)$$

où $P1n_i$ et $P2n_j$ désignent respectivement une estimation à l'instant considéré de la puissance du signal d'entrée X2n (i), et du signal de sortie Y1n(j) considérés.

Chaque module 64 de calcul de gains calcule alors chaque gain en émission $Ge_n(j)$ sur la base des N variables G(j,i), et en fonction de la variable de couplage COR(j, i) correspondante.

Selon une implémentation préférée, chaque gain en émission $Ge_n(j)$ est déterminé à partir de la valeur minimale des N variables G(j,i), i variant de 1 à N, calculées pour la voie d'émission j associée.

En pratique, chaque gain en émission $Ge_n(j)$ est déterminé selon l'équation suivante :

$$Ge_n(j) = \gamma \cdot Ge_{n-1}(j) + (1-\gamma) \cdot \min_i(G(j,i)) \qquad (11)$$

où :

$Ge_{n-1}(j)$ désigne la valeur du gain en émission de la voie d'émission j à l'instant de calcul précédent,
$\gamma$ désigne une constante positive inférieure à 1, et
$\min_i(G(j,i))$ désigne la valeur minimale des N variables G(j,i), i variant de 1 à N.

En prenant la valeur minimale $\min_i(G(j,i))$ on applique à la voie j considérée le plus petit gain (c.-à-d., le plus grand affaiblissement), qui tient par conséquent compte de la valeur de couplage la plus grande dans tous les chemins d'écho possibles du système.

De préférence (mais non nécessairement) en combinaison avec le mode de calcul des gains en émission, exposé ci-dessus, tous les gains en réception $Gr_n(i)$ ont la même valeur déterminée selon l'équation suivante :

$$Gr_n(i) = 1 - \delta \cdot \max_j(Ge_n(j)) \qquad (12)$$

où $\delta$ désigne une constante positive inférieure à 1, et $\max_j(Ge_n(j))$ désigne la valeur maximale des M gains en émission $Ge_n(j)$, j variant de 1 à M.

Cependant, selon une autre implémentation du dispositif représenté à la figure 6, chacun des gains en réception $Gr_n(i)$ est choisi égal à 1. Cette solution présente l'avantage de simplifier le mode de calcul des gains, tout en procurant de très bons résultats de traitement d'écho.

Calcul de chaque variable de couplage (COR(j,i)

Conformément à l'invention, chaque variable de couplage COR(j,i) est obtenue à partir d'un calcul de corrélation entre le signal de sortie Y1n(j) et le signal d'entrée X2n(i), correspondants. Selon une implémentation préférée, on effectue un calcul de corrélation d'enveloppes.

En pratique, chaque variable de couplage COR(j,i) est obtenue à partir de la valeur maximale, Maxcor, des valeurs de corrélation $corr_{ji}(d)$ entre le signal de sortie Y1n(j) et le signal d'entrée X2n(i) correspondants, ces valeurs de corrélation $corr_{ji}(d)$ étant calculées sur une fenêtre temporelle prédéfinie. Chacune des valeurs de corrélation est obtenue selon l'équation suivante :

$$corr_{ji}(d) = \frac{\sum_{c=0}^{LM-1} P1n_i(c) \cdot P2n_j(c+d)}{\sum_{c=0}^{LM-1} P1n_i^2(c)} \qquad (13)$$

où :

c représente un instant d'échantillonnage dans la fenêtre temporelle de calcul de durée LM,

d représente une valeur de décalage entre les signaux d'entrée X2n(i) et de sortie Y1n(j) ; et

$P1n_i$ $(t)$ et $P2n_j(t)$ représentent respectivement une estimation à un instant t considéré de la puissance du signal d'entrée X2n(i) et du signal de sortie Y1 n(j) considérés.

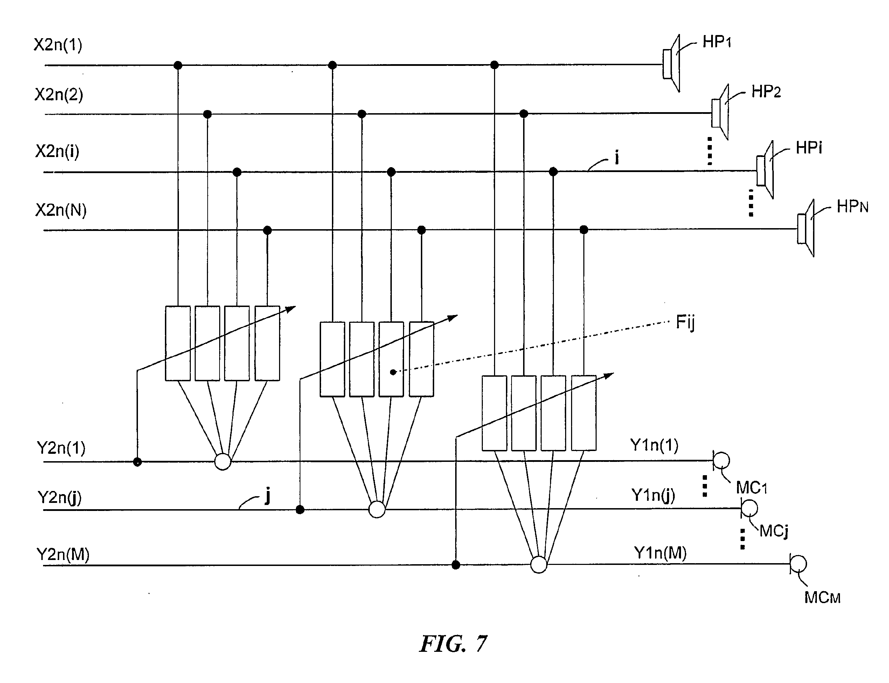

En liaison avec la **figure 7,** on va décrire un dispositif d'annulation d'écho multivoies selon un sixième mode de réalisation de l'invention. Ce mode de réalisation peut être considéré comme la généralisation au cas multivoies des dispositifs d'annulation d'écho monovoie décrits plus haut en liaison avec les figures 3 et 4.

Comme représenté à la figure 7, un dispositif d'annulation d'écho multivoies selon l'invention, comprend une pluralité N de voies de réception, N étant un entier supérieur ou égal à 2, et une pluralité M de voies d'émission, M étant un entier supérieur ou égal à 1.

Chacune, i, des N voies de réception comprenant un transducteur de sortie (haut-parleur) HPi qui produit une onde de pression sonore en réponse à un signal d'entrée X2n(i). D'autre part, chacune, j, des M voies d'émission comprend un transducteur d'entrée (microphone) MCj qui convertit une onde de pression sonore en un signal de sortie Y1n(j).

Par ailleurs, le dispositif d'annulation d'écho comprend, pour chaque voie d'émission j, N filtres d'identification Fij à coefficients variables pour estimer le couplage acoustique entre chacun des N haut-parleurs HPi et le microphone MCj de la voie d'émission j. Il comprend d'autre part, pour chaque filtre Fij, des moyens d'adaptation (non représentés) des coefficients du filtre en fonction d'un pas d'adaptation $\mu_n(i,j)$, et des moyens de calcul (non représentés) du pas d'adaptation $\mu_n(i,j)$.

Chaque filtre Fij associé à une voie de réception i et à une voie d'émission j génère un signal de filtrage qui est soustrait au signal de sortie Y1n(j) pour fournir un signal filtré Y2n(j).

Conformément à l'invention, le dispositif comprend en outre des moyens (non représentés) d'estimation de la puissance instantanée $P1n_i$ de chaque signal d'entrée X2n(i), et de celle $P2n_j$ de chaque signal de sortie Y1n(j).

Il comprend aussi des moyens de calcul (non représentés), pour chaque voie d'émission j, de N variables de couplage COR(j,i) (i variant de 1 à N), chacune desquelles étant caractéristique du couplage acoustique existant entre le signal de sortie Y1n(j) de la voie d'émission considérée et un des N signaux d'entrée X2n(i).

Les moyens de calcul du pas d'adaptation $\mu_n(i,j)$ pour un filtre Fij associé à une voie de réception i et à une voie d'émission j données, calculent le pas d'adaptation $\mu_n(i,j)$ en fonction :

- des puissances estimées $P1n_i$ (i variant de 1 à N) calculées pour les N voies de réception i,
- de la puissance estimée $P2n_j$ calculée pour la voie d'émission j, et
- des N variables de couplage COR(j, i), i variant de 1 à N, associées à la voie d'émission j considérée.

Calcul de chaque variable de couplage (COR(j,i)

Dans ce mode de réalisation, chacune des variables de couplage COR(j, i) est obtenue à partir d'un calcul de corrélation entre le signal de sortie Y1n(j) et le signal d'entrée X2n(i) associés au couple considéré de voies (i, j) de réception et d'émission.

De même que pour les autres modes de réalisation de l'invention décrits supra, selon une implémentation préférée, ce calcul de corrélation est un calcul de corrélation d'enveloppes.

En pratique, chaque variable de couplage $COR(j,i)$ est obtenue comme une fonction de la valeur maximale, $Maxcor(j,i)$, des valeurs de corrélation, $corr_{ji}(d)$, calculées sur une fenêtre temporelle considérée, chacune des valeurs de corrélation $corr_{ji}(d)$ étant calculée selon l'équation suivante :

$$corr_{ji}(d) = \frac{\sum_{c=0}^{LM-1} P1n_i(c) \cdot P2n_j(c+d)}{\sum_{c=0}^{LM-1} P1n_i^2(c)} \qquad (14)$$

où :

c représente un instant d'échantillonnage dans la fenêtre temporelle de calcul de durée LM,

d représente une valeur de décalage entre les signaux d'entrée X2n(i) et de sortie Y1n(j) ; et

$P1n_i(t)$ et $P2n_j(t)$ représentent respectivement une estimation à un instant t considéré de la puissance du signal d'entrée X2n(i), et du signal de sortie Y1n(j).

En pratique, chaque variable de couplage *COR(j,i)* est liée à la valeur maximale *Maxcor(j,i)* des valeurs de corrélation *corr$_{ji}$(d),* selon l'équation suivante :

$$COR(j,i) = \frac{k}{Maxcor(j,i)} \tag{15}$$

où k est une constante positive.

Calcul du pas d'adaptation $\mu_n$(i,j) pour un filtre Fij

Dans ce mode de réalisation, un pas d'adaptation $\mu_n$(i, j) pour un filtre Fij associé à une voie de réception i et à une voie d'émission j, est obtenu selon l'équation suivante :

$$\mu_n(i,j) = \frac{P1n_i}{b_i \cdot P1n_i + COR(j,i) \cdot P2n_j + \sum_{k \neq i} COR(j,k) \cdot P1n_k} \tag{16}$$

où $b_i$ est une constante positive.

Grâce à la présence du terme $\sum_{k \neq i} COR(j,k) \cdot P1n_k$ dans l'expression du pas $\mu_n$(i, j) ci-dessus, les voies de réception, autres que la voie i considérée, ne viennent pas perturber la convergence du filtre Fij, et cela, en provoquant une diminution automatique de la valeur du pas. D'autre part, la présence des variables COR(j, k) permet de mesurer l'influence réelle des voies de réception autres que la voie i considérée, sur la voie d'émission j.

De façon similaire au cas monovoie décrit plus haut en liaison avec la figure 4, selon une variante de réalisation, le dispositif d'annulation d'écho multivoies représenté à la figure 7, peut comprendre en outre des moyens de calcul, pour chaque voie d'émission j, de N secondes variables de couplage COR2(j, i), i variant de 1 à N.

Chacune des secondes variables de couplage est caractéristique du couplage acoustique existant entre le signal filtré Y2n(j) de la voie d'émission j considérée et un des N signaux d'entrée X2n(i).

Dans ce mode de réalisation, le pas d'adaptation $\mu_n$(i,j) d'un filtre d'identification Fij associé à une voie de réception i et à une voie d'émission j, est calculé en fonction des N premières variables COR(j, i) et des N secondes variables de couplage COR2(j, i).

Dans une implémentation préférée, le pas d'adaptation $\mu_n$(i, j) pour un filtre Fij associé à une voie de réception i et à une voie d'émission j, est obtenu selon l'équation suivante :

$$\mu_n(i,j) = \frac{COR(j,i)}{COR2(j,i)} \cdot \frac{P1n_i}{b_i \cdot P1n_i + COR(j,i) \cdot P2n_j + \sum_{k \neq i} COR(j,k) \cdot P1n_k} \tag{17}$$

où $b_i$ est une constante positive.

On peut aussi combiner un dispositif de traitement d'écho multivoies à gains variables selon l'invention (fig. 6) et un dispositif d'annulation d'écho multivoies selon l'invention (fig. 7), pour en cumuler les avantages.

Dans ce cas, un tel dispositif multivoies (non représenté dans les dessins) comporte, pour chaque couple de voies de réception i et d'émission j, des moyens d'application de gains destinés à appliquer un gain en réception Gr$_n$(i) sur le signal d'entrée X2n(i), et un gain en émission Ge$_n$(j) sur le signal filtré Y2n(j).

Les gains Gr$_n$(i), Ge$_n$(j) sont alors calculés sur la base des N secondes variables de couplage COR2(j, i) déterminées pour la voie d'émission j, selon le même principe que pour le dispositif décrit plus haut en relation avec la figure 6.

De manière pratique, les différents dispositifs de traitement d'écho selon la présente invention, décrits ci-dessus, peuvent être réalisés, de façon usuelle, en programmant un processeur spécialisé pour le traitement du signal *(digital signal processor* - DSP). Ils peuvent être également réalisés au moyen de circuits intégrés spécifiques (ASIC) dédiés à ces applications.

Bien entendu, la présente invention n'est nullement limitée aux modes de réalisation décrits ici, mais englobe, bien au contraire, toute variante à la portée de l'homme du métier.

## Revendications

1. Dispositif de traitement d'écho pour atténuer dans un signal de retour Y2n des composantes d'écho d'un signal direct X1n, comprenant :

   - des moyens de calcul de gains (36) en réception et en émission $Gr_n$, $Ge_n$;
   - des premiers moyens d'application de gain (10) pour appliquer le gain en réception $Gr_n$ au signal direct et produire un signal d'entrée X2n émis dans un système générateur d'écho (26) ;
   - des seconds moyens d'application de gain (12) pour appliquer le gain en émission $Ge_n$ à un signal de sortie Y1n issu du système générateur d'écho (26) et produire le signal de retour Y2n ;

   ledit dispositif étant **caractérisé en ce qu'**il comporte en outre des moyens de calcul (30) d'une variable de couplage, COR, caractéristique du couplage acoustique existant entre le signal direct X1n ou le signal d'entrée X2n, et le signal de sortie Y1n ; et **en ce que** lesdits moyens de calcul de gains (36) sont aptes à calculer les gains en réception et en émission $Gr_n$, $Ge_n$ sur la base de ladite variable de couplage.

2. Dispositif de traitement d'écho selon la revendication 1, **caractérisé en ce qu'**il comporte des moyens d'estimation (28, 32) de la puissance instantanée du signal direct X1n ou du signal d'entrée X2n, et de celle du signal de sortie Y1n, lesdits moyens de calcul de gains (36) étant aptes à calculer les gains en réception et en émission $Gr_n$, $Ge_n$ sur la base d'une variable G déterminée en fonction des puissances estimées du signal direct ou du signal d'entrée, et du signal de sortie, et en fonction de la variable de couplage COR, selon l'équation suivante :

$$G = \frac{P2n}{P2n + COR \cdot P1n}$$

où P1n et P2n désignent respectivement une estimation à l'instant considéré de la puissance du signal direct X1n ou du signal d'entrée X2n, et du signal de sortie Y1n.

3. Dispositif de traitement d'écho selon la revendication 2, **caractérisé en ce que** les moyens de calcul de gains (36) déterminent de façon récursive les gains en réception $Gr_n$ et en émission $Ge_n$ selon les équations suivantes :

$$Ge_n = \gamma \cdot Ge_{n-1} + (1 - \gamma) \cdot G$$

$$Gr_n = 1 - \delta \cdot Ge_n$$

où $Ge_{n-1}$ désigne la valeur du gain en émission à l'instant de calcul précédent, et $\gamma$ et $\delta$ désignent des constantes positives inférieures à 1.

4. Dispositif de traitement d'écho selon l'une quelconque des revendications 1 à 3, **caractérisé en ce que** la variable de couplage COR est obtenue à partir d'un calcul de corrélation entre le signal direct X1n ou le signal d'entrée X2n, et le signal de sortie Y1n.

5. Dispositif de traitement d'écho selon la revendication 4, **caractérisé en ce que** ledit calcul de corrélation entre le signal direct X1n ou le signal d'entrée X2n, et le signal de sortie Y1n, est un calcul de corrélation d'enveloppes.

6. Dispositif de traitement d'écho selon la revendication 5, **caractérisé en ce que**, selon ledit calcul de corrélation d'enveloppes, la variable de couplage COR est une fonction de la valeur maximale, Maxcor, de valeurs de corrélation corr(j) entre le signal direct X1n ou le signal d'entrée X2n, et le signal de sortie Y1n, lesdites valeurs de corrélation corr(j) étant calculées sur une fenêtre temporelle considérée, chacune d'entre elles étant obtenue selon l'équation suivante :

$$corr(j) = \frac{\sum\limits_{i=0}^{LM-1} P1(i) \cdot P2(i+j)}{\sum\limits_{i=0}^{LM-1} P1^2(i)}$$

où : i représente un instant d'échantillonnage dans la fenêtre temporelle de calcul de durée LM, j représente une valeur de décalage entre les signaux d'entrée X2n et de sortie Y1n ; et P1(t) et P2(t) représentent respectivement une estimation à un instant t considéré de la puissance du signal direct X1 n ou du signal d'entrée X2n, et du signal de sortie Y1n.

7. Dispositif de traitement d'écho selon la revendication 6, **caractérisé en ce que** la variable de couplage COR est liée à la valeur maximale Maxcor des valeurs de corrélation corr(j) calculées sur une fenêtre temporelle de calcul considérée, selon l'équation suivante :

$$COR = Exp(k\,Maxcor)$$

où Exp désigne la fonction exponentielle, et k est une constante positive.

8. Dispositif de traitement d'écho selon l'une quelconque des revendications précédentes, dans lequel le signal d'entrée X2n est émis dans le système générateur d'écho au moyen d'au moins un haut-parleur (22), et dans lequel le signal de sortie Y1n est obtenu à partir du système générateur d'écho par l'intermédiaire d'au moins un microphone (24).

9. Dispositif de traitement d'écho selon l'une quelconque des revendications 1 à 8, **caractérisé en ce qu'**il inclut en outre un dispositif d'annulation d'écho (40) recevant en entrée, d'une part, ledit signal d'entrée X2n émis dans le système générateur d'écho (26), et d'autre part, un signal Y3n issu du système générateur d'écho (26), le dispositif d'annulation d'écho (40) comprenant un filtre d'identification (42) à réponse impulsionnelle finie représentative de la réponse du système générateur d'écho (26), le filtre d'identification (42) étant destiné à générer un signal de filtrage Sn, et comprenant des moyens (44) pour soustraire du signal Y3n le signal de filtrage Sn, afin de produire ledit signal de sortie Y1n qui est reçu en entrée par lesdits moyens d'application de gain en émission (12).

10. Dispositif d'annulation d'écho pour atténuer dans un signal de sortie Y1n des composantes d'écho d'un signal d'entrée X2n émis dans un système générateur d'écho (26), comprenant :

   - un filtre d'identification (42) à réponse impulsionnelle finie représentative de la réponse du système générateur d'écho (26), recevant en entrée le signal d'entrée X2n et générant un signal de filtrage Sn ;
   - des moyens de soustraction (44) recevant en entrée, d'une part, un signal Y3n issu du système générateur d'écho (26), dont au moins une composante est une réponse du système générateur d'écho au signal d'entrée X2n, et d'autre part le signal de filtrage Sn, pour soustraire du signal Y3n le signal de filtrage Sn, et produire le signal de sortie Y1 n ;
   - des moyens d'adaptation (46) des coefficients du filtre d'identification en fonction d'un pas d'adaptation $\mu_n$ ;
   - des moyens de calcul (50) du pas d'adaptation $\mu_n$ ;

**caractérisé en ce que** les moyens de calcul (50) du pas d'adaptation comprennent des moyens d'estimation (28, 48) de la puissance, P1n, du signal d'entrée X2n, et de celle, P3n, du signal Y3n, et des moyens de calcul (52) d'une première variable de couplage, COR2, caractéristique du couplage acoustique existant entre le signal d'entrée X2n, et le signal Y3n issu du système générateur d'écho (26) ; le pas d'adaptation $\mu_n$ du filtre d'identification étant calculé en fonction des puissances estimées P1n, P3n, et en fonction de la première variable de couplage COR2.

**11.** Dispositif selon la revendication 10, **caractérisé en ce que** le pas d'adaptation $\mu_n$ est obtenu selon l'équation suivante :

$$\mu_n = \frac{P1n}{\alpha \cdot P1n + COR2.P3n}$$

où $\alpha$ est une constante positive, et, P1n et P3n désignent respectivement une estimation à l'instant considéré de la puissance du signal d'entrée X2n, et de celle du signal Y3n issu du système générateur d'écho.

**12.** Dispositif selon la revendication 10 ou 11, **caractérisé en ce que** la première variable de couplage COR2 est obtenue à partir d'un calcul de corrélation entre le signal d'entrée X2n et le signal Y3n.

**13.** Dispositif selon la revendication 12, **caractérisé en ce que** ledit calcul de corrélation entre le signal d'entrée X2n et le signal Y3n, est un calcul de corrélation d'enveloppes.

**14.** Dispositif selon la revendication 13, **caractérisé en ce que** la première variable de couplage COR2 est une fonction de la valeur maximale, Maxcor2, des valeurs de corrélation, corr2(j), calculées sur une fenêtre temporelle considérée, chacune des valeurs de corrélation corr2(j) étant calculée selon l'équation suivante :

$$corr2(j) = \frac{\displaystyle\sum_{i=0}^{LM-1} P1(i) \cdot P3(i+j)}{\displaystyle\sum_{i=0}^{LM-1} P1^2(i)}$$

où :

i représente un instant d'échantillonnage dans la fenêtre temporelle de calcul de durée LM, j représente une valeur de décalage entre le signal d'entrée X2n et le signal Y3n ; et
P1(t) et P3(t) représentent respectivement une estimation à un instant t considéré de la puissance du signal d'entrée X2n, et de celle du signal Y3n.

**15.** Dispositif selon la revendication 14, **caractérisé en ce que** la première variable de couplage COR2 est liée à la valeur maximale Maxcor2 desdites valeurs de corrélation corr2(j), selon l'équation suivante :

$$COR2 = \frac{k}{Maxcor2}$$

où k est une constante positive.

**16.** Dispositif d'annulation d'écho selon l'une quelconque des revendications 10 à 15, **caractérisé en ce que** les moyens de calcul du pas d'adaptation comprennent en outre des moyens de calcul (30a) d'une seconde variable de couplage, COR, caractéristique du couplage acoustique entre le signal d'entrée X2n du système générateur d'écho (26) et le signal de sortie Y1n, la seconde variable de couplage COR étant obtenue par un calcul de corrélation entre les signaux d'entrée X2n et de sortie Y1n ; le pas d'adaptation $\mu_n$ du filtre d'identification étant en outre calculé en fonction de la seconde variable de couplage COR.

**17.** Dispositif d'annulation d'écho selon la revendication 16, **caractérisé en ce que** la seconde variable de couplage COR est obtenue à partir d'un calcul de corrélation d'enveloppes entre les signaux d'entrée X2n et de sortie Y1n.

**18.** Dispositif d'annulation d'écho selon la revendication 17, **caractérisé en ce que** la seconde variable de couplage COR est une fonction de la valeur maximale, Maxcor, de valeurs de corrélation corr(j) entre le signal d'entrée X2n, et le signal de sortie Y1n, lesdites valeurs de corrélation corr(j) étant calculées sur une fenêtre temporelle considérée, chacune d'entre elles étant obtenue selon l'équation suivante :

$$corr(j) = \frac{\sum_{i=0}^{LM-1} P1(i) \cdot P2(i+j)}{\sum_{i=0}^{LM-1} P1^2(i)}$$

où : i représente un instant d'échantillonnage dans la fenêtre temporelle de calcul, de durée LM ; j représente une valeur de décalage entre le signal d'entrée X2n et le signal de sortie Y1n ; et P1 (t) et P2(t) représentent respectivement une estimation à un instant t considéré de la puissance du signal d'entrée X2n, et du signal de sortie Y1n.

**19.** Dispositif d'annulation d'écho selon la revendication 16, 17 ou 18, **caractérisé en ce que** le pas d'adaptation $\mu_n$ est calculé selon l'équation suivante :

$$\mu_n = \frac{COR}{COR2} \cdot \frac{P1n}{\alpha.P1n + COR2 \cdot P3n}$$

où $\alpha$ est une constante positive, et, P1 n et P3n désignent respectivement une estimation à l'instant considéré de la puissance du signal d'entrée X2n, et de celle du signal Y3n issu du système générateur d'écho.

**20.** Dispositif de traitement d'écho selon la revendication 9, dans lequel le dispositif d'annulation d'écho est tel que revendiqué dans l'une quelconque des revendications 10 à 15 ; le pas d'adaptation $\mu_n$ du filtre d'identification (42) étant calculé en fonction de la puissance estimée P1n du signal direct X1n ou du signal d'entrée X2n, de la puissance estimée P3n du signal Y3n issu du système générateur d'écho (26), et de ladite variable de couplage COR2.

**21.** Dispositif de traitement d'écho selon la revendication 9, dans lequel le dispositif d'annulation d'écho est tel que revendiqué dans l'une quelconque des revendications 16 à 19 ; le pas d'adaptation $\mu_n$ du filtre d'identification (42) étant calculé en fonction de la puissance estimée P1n du signal direct X1n ou du signal d'entrée X2n, de la puissance estimée P3n du signal Y3n issu du système générateur d'écho (26), et desdites variables de couplage COR, COR2.

**22.** Dispositif de traitement d'écho pour système de communication multivoies comprenant une pluralité N de voies de réception, N étant un entier supérieur ou égal à 2, et une pluralité M de voies d'émission, M étant un entier supérieur ou égal à 1 ; chacune, i, des N voies de réception comprenant un transducteur de sortie (HPi) qui produit une onde de pression sonore en réponse à un signal d'entrée X2n(i) issu d'un signal direct X1n(i) ; chacune, j, des M voies d'émission comprenant un transducteur d'entrée (MCj) qui convertit une onde de pression sonore en un signal de sortie Y1n(j) ; ledit dispositif de traitement d'écho étant destiné à atténuer dans chaque signal de sortie Y1n (j) des composantes d'écho provenant de tout ou partie des N signaux d'entrée X2n(i), et résultant du couplage acoustique existant entre le transducteur d'entrée de la voie d'émission considérée et tout ou partie des M transducteurs de sortie, ledit dispositif étant **caractérisé en ce qu'**il comporte :

- des moyens de calcul de gains en réception $Gr_n(i)$ et de gains en émission $Ge_n(j)$ ;

- des moyens d'application de gains en réception pour appliquer un gain en réception $Gr_n(i)$ à chaque signal direct X1n(i) et produire le signal d'entrée X2n(i) correspondant ;

- des moyens d'application de gains en émission pour appliquer un gain en émission $Ge_n(j)$ à chaque signal de sortie Y1n(j) et produire un signal de retour Y2n(j) correspondant ;

- des moyens de calcul, pour chaque voie d'émission j, de N variables de couplage COR(j,i), i variant de 1 à N, chacune desquelles étant caractéristique du couplage acoustique existant entre le signal de sortie Y1n(j) de la voie d'émission et un des N signaux d'entrée X2n(i) ;

lesdits moyens de calcul de gains étant aptes à calculer chaque gain en réception $Gr_n(i)$ et chaque gain en émission $Ge_n(j)$ sur la base des N variables de couplage COR(j,i) calculées pour la voie d'émission j associée.

23. Dispositif selon la revendication 22, **caractérisé en ce qu'**il comporte des moyens d'estimation de la puissance instantanée, $P1n_i$, de chaque signal d'entrée X2n(i), et de celle, $P2n_j$, de chaque signal de sortie Y1n(j), lesdits moyens de calcul de gains en émission étant aptes à calculer chaque gain en émission $Ge_n(j)$ sur la base de N variables G(j, i), i variant de 1 à N, chacune desquelles étant déterminée en fonction des puissances estimées d'un signal d'entrée X2n(i), et du signal de sortie Y1n(j) de la voie d'émission considérée, et en fonction de la variable de couplage COR(j, i) correspondante, chacune des variables G(j,i) étant obtenue selon l'équation suivante :

$$G(j,i) = \frac{P2n_j}{P2n_j + COR(j,i) \cdot P1n_i}$$

où $P1n_i$ et $P2n_j$ désignent respectivement une estimation à l'instant considéré de la puissance du signal d'entrée X2n(i), et du signal de sortie Y1n(j) considérés.

24. Dispositif selon la revendication 23, **caractérisé en ce que** chaque gain en émission $Ge_n(j)$ est déterminé à partir de la valeur minimale des N variables G(j,i), i variant de 1 à N, calculées pour la voie d'émission j associée.

25. Dispositif selon la revendication 24, **caractérisé en ce que** chaque gain en émission $Ge_n(j)$ est déterminé selon l'équation suivante :

$$Ge_n(j) = \gamma \cdot Ge_{n-1}(j) + (1 - \gamma) \cdot \min_i(G(j,i))$$

où $Ge_{n-1}(j)$ désigne la valeur du gain en émission de la voie d'émission j à l'instant de calcul précédent, $\gamma$ désigne une constante positive inférieure à 1, et $\min_i(G(j,i))$ désigne la valeur minimale des N variables G(j,i), i variant de 1 à N.

26. Dispositif selon la revendication 25, **caractérisé en ce que** tous les gains en réception $Gr_n(i)$ ont la même valeur déterminée selon l'équation suivante :

$$Gr_n(i) = 1 - \delta \cdot \max_j(Ge_n(j))$$

où $\delta$ désigne une constante positive inférieure à 1, et $\max_j(Ge_n(j))$ désigne la valeur maximale des M gains en émission $Ge_n(j)$, j variant de 1 à M.

27. Dispositif selon l'une quelconque des revendications 22 à 25, **caractérisé en ce que** chacun desdits gains en réception $Gr_n(i)$ est égal à 1.

28. Dispositif selon l'une quelconque des revendications 22 à 27, **caractérisé en ce que** chaque variable de couplage COR(j,i) est obtenue à partir d'un calcul de corrélation entre le signal de sortie Y1n(j) et le signal d'entrée X2n(i), correspondants.

29. Dispositif selon la revendication 28, **caractérisé en ce que** le calcul de corrélation entre un signal de sortie Y1n(j) et un signal d'entrée X2n(i), est un calcul de corrélation d'enveloppes.

30. Dispositif selon la revendication 29, **caractérisé en ce que**, selon ledit calcul de corrélation d'enveloppes, chaque variable de couplage COR(j,i) est une fonction de la valeur maximale, Maxcor, de valeurs de corrélation $corr_{ji}(d)$ entre le signal de sortie Y1n(j) et le signal d'entrée X2n(i), lesdites valeurs de corrélation $corr_{ji}(d)$ étant calculées sur une fenêtre temporelle prédéfinie, chacune d'entre elles étant obtenue selon l'équation suivante :

$$corr_{ji}(d) = \frac{\sum_{c=0}^{LM-1} P1n_i(c) \cdot P2n_j(c+d)}{\sum_{c=0}^{LM-1} P1n_i^2(c)}$$

où : c représente un instant d'échantillonnage dans la fenêtre temporelle de calcul de durée LM, d représente une valeur de décalage entre les signaux d'entrée X2n(i) et de sortie Y1n(j) ; et $P1n_i(t)$ et $P2n_j(t)$ représentent respectivement une estimation à un instant t considéré de la puissance du signal d'entrée X2n(i), et du signal de sortie Y1n(j).

31. Dispositif d'annulation d'écho pour système de communication multivoies comprenant une pluralité N de voies de réception, N étant un entier supérieur ou égal à 2, et une pluralité M de voies d'émission, M étant un entier supérieur ou égal à 1 ; chacune, i, des N voies de réception comprenant un transducteur de sortie (HPi) qui produit une onde de pression sonore en réponse à un signal d'entrée X2n(i) ; chacune, j, des M voies d'émission comprenant un transducteur d'entrée (MCj) qui convertit une onde de pression sonore en un signal de sortie Y1n(j) ; le dispositif comprenant :

- pour chaque voie d'émission j, N filtres d'identification Fij à coefficients variables pour estimer le couplage acoustique entre chacun des N transducteurs de sortie (HPi) et le transducteur d'entrée (MCj) de la voie d'émission j, et
- pour chaque filtre Fij, des moyens d'adaptation des coefficients du filtre en fonction d'un pas d'adaptation $\mu_n(i,j)$, et des moyens de calcul du pas d'adaptation $\mu_n(i,j)$ ;

le dispositif étant **caractérisé en ce qu'**il comporte :

- des moyens d'estimation de la puissance instantanée $P1n_i$ de chaque signal d'entrée X2n(i), et de celle $P2n_j$ de chaque signal de sortie Y1n(j) ;
- des moyens de calcul, pour chaque voie d'émission j, de N variables de couplage COR(j,i), i variant de 1 à N, chacune desquelles étant caractéristique du couplage acoustique existant entre le signal de sortie Y1n(j) de la voie d'émission et un des N signaux d'entrée X2n(i) ;

les moyens de calcul du pas d'adaptation $\mu_n(i,j)$ pour un filtre Fij associé à une voie de réception i et à une voie d'émission j étant aptes à calculer le pas d'adaptation $\mu_n(i,j)$ en fonction des puissances estimées $P1n_i$, i variant de 1 à N, pour les N voies de réception, de la puissance $P2n_j$ estimée pour la voie d'émission j, et en fonction des N variables de couplage COR(j, i), i variant de 1 à N, associées à la voie d'émission j.

32. Dispositif selon la revendication 31, **caractérisé en ce qu'**un pas d'adaptation $\mu_n(i, j)$ pour un filtre Fij associé à une voie de réception i et à une voie d'émission j, est obtenu selon l'équation suivante :

$$\mu_n(i,j) = \frac{P1n_i}{b_i \cdot P1n_i + COR(j,i) \cdot P2n_j + \sum_{k \neq i} COR(j,k) \cdot P1n_k}$$

où $b_i$ est une constante positive.

**33.** Dispositif selon la revendication 31 ou 32, **caractérisé en ce qu'**une variable de couplage COR(j,i) est obtenue à partir d'un calcul de corrélation entre le signal de sortie Y1n(j) et le signal d'entrée X2n(i).

**34.** Dispositif selon la revendication 33, **caractérisé en ce que** ledit calcul de corrélation entre le signal de sortie Y1n (j) et le signal d'entrée X2n(i), est un calcul de corrélation d'enveloppes.

**35.** Dispositif selon la revendication 34, **caractérisé en ce qu'**une variable de couplage *COR(j,i)* est une fonction de la valeur maximale, *Maxcor( j, i)* , des valeurs de corrélation, *corr$_{ji}$(d)*, calculées sur une fenêtre temporelle considérée, chacune des valeurs de corrélation *corr$_{ji}$(d)* étant calculée selon l'équation suivante :

$$corr_{ji}(d) = \frac{\sum_{c=0}^{LM-1} P1n_i(c) \cdot P2n_j(c+d)}{\sum_{c=0}^{LM-1} P1n_i{}^2(c)}$$

où :

c représente un instant d'échantillonnage dans la fenêtre temporelle de calcul de durée LM, d représente une valeur de décalage entre les signaux d'entrée X2n(i) et de sortie Y1n(j) ; et $P1n_i(t)$ et $P2n_j$ *(t)* représentent respectivement une estimation à un instant t considéré de la puissance du signal d'entrée X2n(i), et du signal de sortie Y1n(j).

**36.** Dispositif selon la revendication 35, **caractérisé en ce que** la variable de couplage *COR(j,i)* est liée à la valeur maximale *Maxcor(j,i)* desdites valeurs de corrélation *corr$_{ji}$ (d),* selon l'équation suivante :

$$COR(j,i) = \frac{k}{Maxcor(j,i)}$$

où k est une constante positive.

**37.** Dispositif selon l'une quelconque des revendications 31 à 36, dans lequel chaque filtre Fij associé à une voie de réception i et à une voie d'émission j génère un signal de filtrage qui est soustrait au signal de sortie Y1 n(j) pour fournir un signal filtré Y2n(j),
**caractérisé en ce qu'**il comporte en outre des moyens de calcul, pour chaque voie d'émission j, de N secondes variables de couplage COR2(j,i), i variant de 1 à N, chacune desquelles étant caractéristique du couplage acoustique existant entre le signal filtré Y2n(j) de la voie d'émission et un des N signaux d'entrée X2n(i) ; le pas d'adaptation $\mu_n(i,j)$ d'un filtre d'identification Fij associé à une voie de réception i et à une voie d'émission j étant en outre calculé en fonction desdites N secondes variables de couplage COR2(j,i).

**38.** Dispositif selon la revendication 37, **caractérisé en ce qu'**un pas d'adaptation $\mu_n(i, j)$ pour un filtre Fij associé à une voie de réception i et à une voie d'émission j, est obtenu selon l'équation suivante :

$$\mu_n(i,j) = \frac{COR(j,i)}{COR2(j,i)} \cdot \frac{P1n_i}{b_i \cdot P1n_i + COR(j,i) \cdot P2n_j + \sum_{k \neq i} COR(j,k) \cdot P1n_k}$$

où $b_i$ est une constante positive.

**39.** Dispositif selon la revendication 37 ou 38, **caractérisé en ce qu'**il comporte en outre, pour chaque couple de voies de réception i et d'émission j, des moyens d'application de gains pour appliquer un gain en réception $Gr_n(i)$ sur le signal d'entrée X2n(i), et un gain en émission $Ge_n(j)$ sur le signal filtré Y2n(j) ; lesdits gains $Gr_n(i)$, $Ge_n(j)$ étant calculés sur la base des N secondes variables de couplage COR2(j,i) déterminées pour la voie d'émission j.

**Claims**

**1.** Echo processing device for attenuating echo components of a direct signal X1n in a return signal Y2n, comprising:

- means (36) for calculating a receive gain and a send gain $Gr_n$, $Ge_n$;
- first means of gain application (10) for applying the receive gain $Gr_n$ to the direct signal and producing an input signal X2n sent to an echo generating system (26);
- second means of gain application (12) for applying the send gain $Ge_n$ to an output signal Y1n emanating from the echo generating system (26) and for producing the return signal Y2n;

the said device being **characterized in that** it furthermore comprises means (30) for calculating a coupling variable, COR, characteristic of the acoustic coupling existing between the direct signal X1n or the input signal X2n, and the output signal Y1n; and **in that** the said means for calculating gains (36) are able to calculate the receive and send gains $Gr_n$, $Ge_n$ on the basis of the said coupling variable.

**2.** Echo processing device according to Claim 1, **characterized in that** it comprises means (28, 32) for estimating the instantaneous power of the direct signal X1n or of the input signal X2n, and that of the output signal Y1n, the said means for calculating gains (36) being able to calculate the receive and send gains $Gr_n$, $Ge_n$ on the basis of a variable G determined as a function of the estimated powers of the direct signal or of the input signal, and of the output signal, and as a function of the coupling variable COR, according to the following equation:

$$G = \frac{P2n}{P2n + COR \cdot P1n}$$

where P1n and P2n respectively designate an estimate at the instant considered of the power of the direct signal X1n or of the input signal X2n, and of the output signal Y1n.

**3.** Echo processing device according to Claim 2,
**characterized in that** the means for calculating gains (36) determine in a recursive manner the receive $Gr_n$ and send $Ge_n$ gains according to the following equations:

$$Ge_n = \gamma \cdot Ge_{n-1} + (1 - \gamma) \cdot G$$

$$Gr_n = 1 - \delta \cdot Ge_n$$

where $Ge_{n-1}$ designates the value of the send gain at the previous calculation instant, and $\gamma$ and $\delta$ designate positive constants less than 1.

**4.** Echo processing device according to any one of Claims 1 to 3, **characterized in that** the coupling variable COR is obtained on the basis of a calculation of correlation between the direct signal X1n or the input signal X2n, and the output signal Y1n.

**5.** Echo processing device according to Claim 4,
**characterized in that** the said calculation of correlation between the direct signal X1n or the input signal X2n, and the output signal Y1n, is an envelopes correlation calculation.

**6.** Echo processing device according to Claim 5, **characterized in that**, according to the said envelopes correlation calculation, the coupling variable COR is a function of the maximum value, Maxcor, of values of correlation corr(j) between the direct signal X1n or the input signal X2n, and the output signal Y1n, the said correlation values corr(j) being calculated over a considered time window, each of them being obtained according to the following equation:

$$corr(j) = \frac{\sum_{i=0}^{LM-1} P1(i) \cdot P2(i+j)}{\sum_{i=0}^{LM-1} P1^2(i)}$$

where: i represents a sampling instant in the calculation time window of duration LM, j represents a value of shift between the input X2n and output Y1n signals; and P1(t) and P2(t) respectively represent an estimate at a considered instant t of the power of the direct signal X1n or of the input signal X2n, and of the output signal Y1n.

7. Echo processing device according to Claim 6, **characterized in that** the coupling variable COR is related to the maximum value Maxcor of the correlation values corr(j) calculated over a considered calculation time window, according to the following equation:

$$COR = Exp(k\ Maxcor)$$

where Exp designates the exponential function, and k is a positive constant.

8. Echo processing device according to any one of the preceding claims, in which the input signal X2n is sent to the echo generating system by means of at least one loudspeaker (22), and in which the output signal Y1n is obtained on the basis of the echo generating system by way of at least one microphone (24).

9. Echo processing device according to any one of Claims 1 to 8, **characterized in that** it furthermore includes an echo cancelling device (40) receiving as input, on the one hand, the said input signal X2n sent to the echo generating system (26), and on the other hand, a signal Y3n emanating from the echo generating system (26), the echo cancelling device (40) comprising an identification filter (42) with finite impulse response representative of the response of the echo generating system (26), the identification filter (42) being intended to generate a filtering signal Sn, and comprising means (44) for subtracting the filtering signal Sn from the signal Y3n, so as to produce the said output signal Y1n which is received as input by the said means of send gain application (12).

10. Echo cancelling device for attenuating echo components of an input signal X2n, in an output signal Y1n, sent to an echo generating system (26), comprising:

   - an identification filter (42) with finite impulse response representative of the response of the echo generating system (26), receiving as input the input signal X2n and generating a filtering signal Sn;
   - means for subtracting (44) receiving as input, on the one hand, a signal Y3n emanating from the echo generating system (26), of which at least one component is a response of the echo generating system to the input signal X2n, and on the other hand the filtering signal Sn, so as to subtract the filtering signal Sn from the signal Y3n, and produce the output signal Y1n;
   - means for adapting (46) the coefficients of the identification filter as a function of an adaptation step size $\mu_n$;
   - means for calculating (50) the adaptation step size $\mu_n$;

   **characterized in that** the means for calculating (50) the adaptation step size comprise means for estimating (28, 48) the power, P1n, of the input signal X2n, and of that, P3n, of the signal Y3n, and means for calculating (52) a first coupling variable, COR2, characteristic of the acoustic coupling existing between the input signal X2n, and the signal Y3n emanating from the echo generating system (26); the adaptation step size $\mu_n$ of the identification filter being calculated as a function of the estimated powers P1n, P3n, and as a function of the first coupling variable COR2.

11. Device according to Claim 10, **characterized in that** the adaptation step size $\mu_n$ is obtained according to the following equation:

$$\mu_n \;=\; \frac{P1n}{\alpha \;\cdot\; P1n \;+\; COR2.P3n}$$

where $\alpha$ is a positive constant, and P1n and P3n respectively designate an estimate at the considered instant of the power of the input signal X2n, and of that of the signal Y3n emanating from the echo generating system.

12. Device according to Claim 10 or 11, **characterized in that** the first coupling variable COR2 is obtained on the basis of a calculation of correlation between the input signal X2n and the signal Y3n.

13. Device according to Claim 12, **characterized in that** the said calculation of correlation between the input signal X2n and the signal Y3n, is an envelopes correlation calculation.

14. Device according to Claim 13, **characterized in that** the first coupling variable COR2 is a function of the maximum value, Maxcor2, of the correlation values, corr2(j), calculated over a considered time window, each of the correlation values corr2 (j) being calculated according to the following equation:

$$corr2(j) \;=\; \frac{\sum_{i=0}^{LM-1} \overline{P1}(i) \cdot \overline{P3}(i+j)}{\sum_{i=0}^{LM-1} P1^2(i)}$$

where:

i represents a sampling instant in the calculation time window of duration LM, j represents a value of shift between the input signal X2n and the signal Y3n; and
P1(t) and P3(t) respectively represent an estimate at a considered instant t of the power of the input signal X2n, and of that of the signal Y3n.

15. Device according to Claim 14, **characterized in that** the first coupling variable COR2 is related to the maximum value Maxcor2 of the said correlation values corr2 (j), according to the following equation:

$$COR2 \;=\; \frac{k}{Maxcor2}$$

where k is a positive constant.

16. Echo cancelling device according to any one of Claims 10 to 15, **characterized in that** the means for calculating the adaptation step size furthermore comprise means for calculating (30a) a second coupling variable, COR, characteristic of the acoustic coupling between the input signal X2n of the echo generating system (26) and the output signal Y1n, the second coupling variable COR being obtained by a calculation of correlation between the input X2n and output Y1n signals; the adaptation step size $\mu_n$ of the identification filter being furthermore calculated as a function of the second coupling variable COR.

17. Echo cancelling device according to Claim 16, **characterized in that** the second coupling variable COR is obtained on the basis of an envelopes correlation calculation between the input X2n and output Y1n signals.

18. Echo cancelling device according to Claim 17, **characterized in that** the second coupling variable COR is a function of the maximum value, Maxcor, of values of correlation corr(j) between the input signal X2n, and the output signal Y1n, the said correlation values corr(j) being calculated over a considered time window, each of them being obtained according to the following equation:

$$corr(j) = \frac{\sum_{i=0}^{LM-1} P1(i) \cdot P2(i+j)}{\sum_{i=0}^{LM-1} P1^2(i)}$$

where: i represents a sampling instant in the calculation time window of duration LM; j represents a value of shift between the input signal X2n and the output signal Y1n; and P1(t) and P2(t) respectively represent an estimate at a considered instant t of the power of the input signal X2n, and of the output signal Y1n.

19. Echo cancelling device according to Claims 16, 17 or 18, **characterized in that** the adaptation step size $\mu_n$ is calculated according to the following equation:

$$\mu_n = \frac{COR}{COR2} \cdot \frac{P1n}{\alpha.P1n + COR2 \cdot P3n}$$

where $\alpha$ is a positive constant, and P1n and P3n respectively designate an estimate at the considered instant of the power of the input signal X2n, and of that of the signal Y3n emanating from the echo generating system.

20. Echo processing device according to Claim 9, in which the echo cancelling device is such as claimed in any one of Claims 10 to 15; the adaptation step size $\mu_n$ of the identification filter (42) being calculated as a function of the estimated power P1n of the direct signal X1n or of the input signal X2n, of the estimated power P3n of the signal Y3n emanating from the echo generating system (26), and of the said coupling variable COR2.

21. Echo processing device according to Claim 9, in which the echo cancelling device is such as claimed in any one of Claims 16 to 19; the adaptation step size $\mu_n$ of the identification filter (42) being calculated as a function of the estimated power P1n of the direct signal X1n or of the input signal X2n, of the estimated power P3n of the signal Y3n emanating from the echo generating system (26), and of the said coupling variables COR, COR2.

22. Echo processing device for multichannel communication system comprising a plurality N of reception channels, N being an integer greater than or equal to 2, and a plurality M of send channels, M being an integer greater than or equal to 1; each, i, of the N reception channels comprising an output transducer (HPi) which produces a sound pressure wave in response to an input signal X2n(i) emanating from a direct signal X1n(i); each, j, of the M send channels comprising an input transducer (MCj) which converts a sound pressure wave into an output signal Y1n(j); the said echo processing device being intended to attenuate in each output signal Y1n(j) echo components originating from all or some of the N input signals X2n(i), and resulting from the acoustic coupling existing between the input transducer of the send channel considered and all or some of the M output transducers, the said device being **characterized in that** it comprises:

- means for calculating receive gains Gr_n(i) and send gains Ge_n(j);
- means for applying receive gains so as to apply a receive gain Gr_n(i) to each direct signal X1n(i) and to produce the corresponding input signal X2n(i) ;
- means for applying send gains so as to apply a send gain Ge_n(j) to each output signal Y1n(j) and to produce a corresponding return signal Y2n(j);
- means for calculating, for each send channel j, N coupling variables COR(j,i), i varying from 1 to N, each of which being characteristic of the acoustic coupling existing between the output signal Y1n(j) of the send channel and one of the N input signals X2n(i);

the said means for calculating gains being able to calculate each receive gain Gr_n(i) and each send gain Ge_n(j) on the basis of the N coupling variables COR(j,i) calculated for the associated send channel j.

23. Device according to Claim 22, **characterized in that** it comprises means for estimating the instantaneous power, P1n_i, of each input signal X2n(i), and of that, P2n_j, of each output signal Y1n(j), the said means for calculating send gains being able to calculate each send gain Ge_n(j) on the basis of the N variables G(j,i), i varying from 1 to N, each of which being determined as a function of the estimated powers of an input signal X2n(i), and of the output signal Y1n(j) of the send channel considered, and as a function of the corresponding coupling variable COR(j,i), each of the variables G(j,i) being obtained according to the following equation:

$$G(j,i) = \frac{P2n_j}{P2n_j + COR(j,i) \cdot P1n_i}$$

where $P1n_i$ and $P2n_j$ designate respectively an estimate at the considered instant of the power of the input signal X2n(i) and of the output signal Y1n (j) considered.

24. Device according to Claim 23, **characterized in that** each send gain $Ge_n$(j) is determined on the basis of the minimum value of the N variables G(j,i), i varying from 1 to N, calculated for the associated send channel j.

25. Device according to Claim 24, **characterized in that** each send gain $Ge_n$(j) is determined according to the following equation:

$$Ge_n(j) = \gamma \cdot Ge_{n-1}(j) + (1 - \gamma) \cdot \min_i(G(j,i))$$

where $Ge_{n-1}$(j) designates the value of the send gain of the send channel j at the previous calculation instant, $\gamma$ designates a positive constant less than 1, and $\min_i$(G(j,i)) designates the minimum value of the N variables G(j,i), i varying from 1 to N.

26. Device according to Claim 25, **characterized in that** all the receive gains $Gr_n$(i) have the same value determined according to the following equation:

$$Gr_n(i) = 1 - \delta \cdot \max_j(Ge_n(j))$$

where $\delta$ designates a positive constant less than 1, and $\max_j$ ($Ge_n$(J)) designates the maximum value of the M send gains $Ge_n$(j), j varying from 1 to M.

27. Device according to any one of Claims 22 to 25, **characterized in that** each of the said receive gains $Gr_n$(i) is equal to 1.

28. Device according to any one of Claims 22 to 27, **characterized in that** each coupling variable COR(j,i) is obtained on the basis of a calculation of correlation between the corresponding output signal Y1n(j) and the corresponding input signal X2n(i).

29. Device according to Claim 28, **characterized in that** the calculation of correlation between an output signal Y1n(j) and an input signal X2n(i), is an envelopes correlation calculation.

30. Device according to Claim 29, **characterized in that**, according to the said envelopes correlation calculation, each coupling variable COR(j,i) is a function of the maximum value, Maxcor, of values of correlation $corr_{ji}$(d) between the output signal Y1n(j) and the input signal X2n(i), the said correlation values $corr_{ji}$(d) being calculated over a predefined time window, each of them being obtained according to the following equation:

$$corr_{ji}(d) = \frac{\sum_{c=0}^{LM-1} P1n_i(c) \cdot P2n_j(c+d)}{\sum_{c=0}^{LM-1} P1n_i^2(c)}$$

where: c represents a sampling instant in the calculation time window of duration LM, d represents a value of shift between the input X2n(i) and output Y1n(j) signals; and $P1n_i$(t) and $P2n_j$(t) respectively represent an estimate at a considered instant t of the power of the input signal X2n(i), and of the output signal Y1n(j) .

31. Echo cancelling device for multichannel communication system comprising a plurality N of reception channels, N being an integer greater than or equal to 2, and a plurality M of send channels, M being an integer greater than or equal to 1; each, i, of the N reception channels comprising an output transducer (HPi) which produces a sound pressure wave in response to an input signal X2n(i); each, j, of the M send channels comprising an input transducer (MCj) which converts a sound pressure wave into an output signal Y1n(j); the device comprising:

- for each send channel j, N identification filters Fij with variable coefficients for estimating the acoustic coupling between each of the N output transducers (HPi) and the input transducer (MCj) of the send channel j, and
- for each filter Fij, means for adaptating the coefficients of the filter as a function of an adaptation step size $\mu_n$ (i,j), and means for calculating the adaptation step size $\mu_n$(i,j);

the device being **characterized in that** it comprises:

- means for estimating the instantaneous power $P1n_i$ of each input signal X2n(i), and of that $P2n_j$ of each output signal Y1n(j);
- means for calculating, for each send channel j, N coupling variables COR(j,i), i varying from 1 to N, each of which being characteristic of the acoustic coupling existing between the output signal Y1n(j) of the send channel and one of the N input signals X2n(i);

the means for calculating the adaptation step size $\mu_n$(i,j) for a filter Fij associated with a receive channel i and with a send channel j being able to calculate the adaptation step size $\mu_n$(i,j) as a function of the estimated powers $P1n_i$, i varying from 1 to N, for the N receive channels, of the power $P2n_j$ estimated for the send channel j, and as a function of the N coupling variables COR(j,i), i varying from 1 to N, associated with the send channel j.

32. Device according to Claim 31, **characterized in that** an adaptation step size $\mu_n$(i,j) for a filter Fij associated with a receive channel i and with a send channel j, is obtained according to the following equation:

$$\mu_n(i,j) = \frac{P1n_i}{b_i \cdot P1n_i + COR(j,i) \cdot P2n_j + \sum_{k \neq i} COR(j,k) \cdot P1n_k}$$

where $b_i$ is a positive constant.

33. Device according to Claim 31 or 32, **characterized in that** a coupling variable COR(j,i) is obtained on the basis of a calculation of correlation between the output signal Y1n(j) and the input signal X2n(i).

34. Device according to Claim 33, **characterized in that** the said calculation of correlation between the output signal Y1n (j) and the input signal X2n(i), is an envelopes correlation calculation.

35. Device according to Claim 34, **characterized in that** a coupling variable COR(j,i) is a function of the maximum value, Maxcor(j,i), of values of correlation, $corr_{ji}(d)$, calculated over a considered time window, each of the values of correlation $corr_{ji}(d)$ being calculated according to the following equation:

$$corr_{ji}(d) = \frac{\sum_{c=0}^{LM-1} P1n_i(c) \cdot P2n_j(c+d)}{\sum_{c=0}^{LM-1} P1n_i^2(c)}$$

where: c represents a sampling instant in the calculation time window of duration LM, d represents a value of shift between the input X2n(i) and output Y1n(j) signals; and $P1n_i(t)$ and $P2n_j(t)$ respectively represent an estimate at a considered instant t of the power of the input signal X2n(i), and of the output signal Y1n(j).

36. Device according to Claim 35, **characterized in that** the coupling variable COR(j,i) is related to the maximum value Maxcor(j,i) of the said correlation values $corr_{ji}(d)$, according to the following equation:

$$COR(j,i) = \frac{k}{Maxcor(j,i)}$$

where k is a positive constant.

37. Device according to any one of Claims 31 to 36, in which each filter Fij associated with a receive channel i and with a send channel j generates a filtering signal which is subtracted from the output signal Y1n(j) to provide a filtered signal Y2n(j),
**characterized in that** it furthermore comprises means for calculating, for each send channel j, N second coupling variables COR2(j,i), i varying from 1 to N, each of which being characteristic of the acoustic coupling existing between the filtered signal Y2n(j) of the send channel and one of the N input signals X2n(i); the adaptation step size $\mu_n(i,j)$ of an identification filter Fij associated with a receive channel i and with a send channel j being furthermore calculated as a function of the said N second coupling variables COR2(j,i).

38. Device according to Claim 37, **characterized in that** an adaptation step size $\mu_n(i,j)$ for a filter Fij associated with a receive channel i and with a send channel j, is obtained according to the following equation:

$$\mu_n(i,j) = \frac{COR(j,i)}{COR2(j,i)} \cdot \frac{P1n_i}{b_i \cdot P1n_i + COR(j,i) \cdot P2n_j + \sum_{k \neq i} COR(j,k) \cdot P1n_k}$$

where $b_i$ is a positive constant.

39. Device according to Claim 37 or 38, **characterized in that** it furthermore comprises, for each pair of receive i and send j channels, means for applying gains for applying a receive gain $Gr_n(i)$ to the input signal X2n(i), and a send gain $Ge_n(j)$ to the filtered signal Y2n(j); the said gains $Gr_n(i)$, $Ge_n(j)$ being calculated on the basis of the N second coupling variables COR2(j,i) determined for the send channel j.

**Patentansprüche**

1. Vorrichtung zur Echoverarbeitung, um in einem Rückwärtssignal Y2n Echokomponenten eines direkten Signals X1n zu dämpfen, die Folgendes aufweist:

   - Mittel zur Berechnung von Verstärkungen (36) in der Empfangsrichtung und in der Senderichtung $Gr_n$, $Ge_n$;
   - erste Mittel (10) zum Anlegen einer Verstärkung, um die Verstärkung $Gr_n$ in der Empfangsrichtung an das direkte Signal anzulegen und ein Eingangssignal X2n zu erzeugen, das an ein Echoerzeugersystem (26) gesendet wird;
   - zweite Mittel (12) zum Anlegen einer Verstärkung, um die Verstärkung in der Senderichtung $Ge_n$ an ein Ausgangssignal Y1n anzulegen, das vom Echoerzeugersystem (26) stammt, und das Rückwärtssignal Y2n zu erzeugen;

   wobei die Vorrichtung **dadurch gekennzeichnet ist, dass** sie weiter Mittel (30) zur Berechnung einer Kopplungsvariablen COR aufweist, die für die zwischen dem direkten Signal X1n oder dem Eingangssignal X2n und dem Ausgangssignal Y1n vorhandene akustische Kopplung kennzeichnend ist; und dass die Verstärkungsberechnungsmittel (36) in der Lage sind, die Verstärkungen in der Empfangsrichtung und in der Senderichtung $Gr_n$, $Ge_n$ auf der Basis der Kopplungsvariablen zu berechnen.

2. Echoverarbeitungsvorrichtung nach Anspruch 1,
   **dadurch gekennzeichnet, dass** sie Mittel (28, 32) zur Schätzung der Augenblicksleistung des direkten Signals X1n oder des Eingangssignals X2n und derjenigen des Ausgangssignals Y1n aufweist, wobei die Verstärkungsberechnungsmittel (36) in der Lage sind, die Verstärkungen in der Empfangsrichtung $Gr_n$ und in der Senderichtung

$Ge_n$ auf der Basis einer Variablen G, die in Abhängigkeit von den geschätzten Leistungen des direkten Signals oder des Eingangssignals und des Ausgangssignals bestimmt wird, und in Abhängigkeit von der Kopplungsvariablen COR gemäß der folgenden Gleichung zu berechnen:

$$G = \frac{P2n}{P2n + COR \cdot P1n}$$

wobei P1n und P2n je eine Schätzung im betrachteten Zeitpunkt der Leistung des direkten Signals X1n oder des Eingangssignals X2n und des Ausgangssignals Y1n bezeichnen.

3. Echoverarbeitungsvorrichtung nach Anspruch 2, **dadurch gekennzeichnet, dass** die Verstärkungsberechnungsmittel (36) die Verstärkungen in der Empfangsrichtung $Gr_n$ und in der Senderichtung $Ge_n$ gemäß den folgenden Gleichungen rekursiv bestimmen:

$$Ge_n = \gamma \cdot Ge_{n-1} + (1 - \gamma) \cdot G$$

$$Gr_n = 1 - \delta \cdot Ge_n$$

wobei $Ge_{n-1}$ den Wert der Verstärkung in der Empfangsrichtung im vorhergehenden Rechnungszeitpunkt bezeichnet, und $\gamma$ und $\delta$ positive Konstanten geringer als 1 bezeichnen.

4. Echoverarbeitungsvorrichtung nach einem der Ansprüche 1 bis 3, **dadurch gekennzeichnet, dass** die Kopplungsvariable COR ausgehend von einer Korrelationsrechnung zwischen dem direkten Signal X1n oder dem Eingangssignal X2n und dem Ausgangssignal Y1n erhalten wird.

5. Echoverarbeitungsvorrichtung nach Anspruch 4, **dadurch gekennzeichnet, dass** die Korrelationsrechnung zwischen dem direkten Signal X1n oder dem Eingangssignal X2n und dem Ausgangssignal Y1n eine Hüllkurven-Korrelationsrechnung ist.

6. Echoverarbeitungsvorrichtung nach Anspruch 5, **dadurch gekennzeichnet, dass** gemäß der Hüllkurven-Korrelationsrechnung die Kopplungsvariable COR eine Funktion des maximalen Werts, Maxcor, von Korrelationswerten corr(j) zwischen dem direkten Signal X1n oder dem Eingangssignal X2n und dem Ausgangssignal Y1n ist, wobei die Korrelationswerte corr(j) in einem betrachteten Zeitfenster berechnet werden, wobei jeder von ihnen gemäß der folgenden Gleichung erhalten wird:

$$corr(j) = \frac{\sum_{i=0}^{LM-1} P1(i) \cdot P2(i + j)}{\sum_{i=0}^{LM-1} P1^2(i)}$$

wobei: i einen Abtastaugenblick im Rechenzeitfenster der Dauer LM bedeutet; j einen Verzögerungswert zwischen dem Eingangssignal X2n und dem Ausgangssignal Y1n bedeutet; und P1(t) und P2(t) jeweils eine Schätzung in einem betrachteten Zeitpunkt t der Leistung des direkten Signals X1n oder des Eingangssignals X2n und des Ausgangssignals Y1n bedeuten.

7. Echoverarbeitungsvorrichtung nach Anspruch 6, **dadurch gekennzeichnet, dass** die Kopplungsvariable COR mit dem maximalen Wert Maxcor der Korrelationswerte corr(j) verbunden ist, die in einem betrachteten Rechenzeitfenster gemäß der folgenden Gleichung berechnet werden:

$$COR = Exp(k.Maxcor)$$

in der Exp die Exponentialfunktion bezeichnet und k eine positive Konstante ist.

8. Echoverarbeitungsvorrichtung nach einem der vorhergehenden Ansprüche, bei der das Eingangssignal X2n im Echoerzeugersystem mit Hilfe mindestens eines Lautsprechers (22) gesendet wird und bei der das Ausgangssignal Y1n ausgehend vom Echoerzeugersystem mit Hilfe mindestens eines Mikrophons (24) erhalten wird.

9. Echoverarbeitungsvorrichtung nach einem der Ansprüche 1 bis 8, **dadurch gekennzeichnet, dass** sie außerdem eine Echounterdrückungsvorrichtung (40) enthält, die am Eingang einerseits das zum Echoerzeugersystem (26) gesendete Eingangssignal X2n und andererseits ein vom Echoerzeugersystem (26) stammendes Signal Y3n empfängt, wobei die Echounterdrückungsvorrichtung (40) ein Identifikationsfilter (42) mit endlicher Impulsantwort aufweist, die für die Antwort des Echoerzeugersystems (26) repräsentativ ist, wobei das Identifikationsfilter (42) dazu bestimmt ist, ein Filtersignal Sn zu erzeugen, und Mittel (44) aufweist, um vom Signal Y3n das Filtersignal Sn zu subtrahieren und um das Ausgangssignal Y1n zu erzeugen, das am Eingang von den Mitteln zum Anlegen einer Verstärkung in der Senderichtung (12) empfangen wird.

10. Echounterdrückungsvorrichtung, um in einem Ausgangssignal Y1n Echokomponenten eines Eingangssignals X2n zu dämpfen, das in ein Echoerzeugersystem (26) gesendet wird, die Folgendes aufweist:

   - ein Identifikationsfilter (42) mit endlicher Impulsantwort, die für die Antwort des Echoerzeugersystems (26) repräsentativ ist, das am Eingang das Eingangssignal X2n empfängt und ein Filtersignal Sn erzeugt;
   - Subtrahiermittel (44), die am Eingang einerseits ein vom Echoerzeugersystem (26) stammendes Signal Y3n, von dem mindestens eine Komponente eine Antwort des Echoerzeugersystems auf das Eingangssignal X2n ist, und andererseits das Filtersignal Sn empfangen, um vom Signal Y3n das Filtersignal Sn zu subtrahieren und das Ausgangssignal Y1n zu erzeugen;
   - Mittel (46) zur Anpassung der Koeffizienten des Identifikationsfilters in Abhängigkeit von einem Anpassungsschritt $\mu_n$;
   - Mittel (50) zur Berechnung des Anpassungsschritts $\mu_n$;

   **dadurch gekennzeichnet, dass** die Mittel (50) zur Berechnung des Anpassungsschritts Mittel (28, 48) zur Schätzung der Leistung P1n des Eingangssignals X2n und derjenigen P3n des Signals Y3n, und Mittel (52) zur Berechnung einer ersten Kopplungsvariablen COR2 aufweisen, die für die zwischen dem Eingangssignal X2n und dem vom Echoerzeugersystem (26) stammenden Signal Y3n vorhandene akustische Kopplung charakteristisch ist; wobei der Anpassungsschritt $\mu_n$ des Identifikationsfilters in Abhängigkeit von den geschätzten Leistungen P1n, P3n und in Abhängigkeit von der ersten Kopplungsvariablen COR2 berechnet wird.

11. Vorrichtung nach Anspruch 10, **dadurch gekennzeichnet, dass** der Anpassungsschritt $\mu_n$ gemäß der folgenden Gleichung erhalten wird:

$$\mu_n = \frac{P1n}{\alpha \cdot P1n + COR2 \cdot P3n}$$

wobei $\alpha$ eine positive Konstante ist, und P1n und P3n jeweils eine Schätzung im betrachteten Zeitpunkt der Leistung des Eingangssignals X2n und derjenigen des vom Echoerzeugersystem stammenden Signals Y3n bezeichnen.

12. Vorrichtung nach Anspruch 10 oder 11, **dadurch gekennzeichnet, dass** die erste Kopplungsvariable COR2 ausgehend von einer Korrelationsrechnung zwischen dem Eingangssignal X2n und dem Signal Y3n erhalten wird.

13. Vorrichtung nach Anspruch 12, **dadurch gekennzeichnet, dass** die Korrelationsrechnung zwischen dem Eingangssignal X2n und dem Signal Y3n eine Hüllkurven-Korrelationsrechnung ist.

14. Vorrichtung nach Anspruch 13, **dadurch gekennzeichnet, dass** die erste Kopplungsvariable COR2 eine Funktion des maximalen Werts, Maxcor2, der Korrelationswerte corr2(j) ist, die in einem betrachteten Zeitfenster berechnet werden, wobei jeder der Korrelationswerte corr2(j) gemäß folgender Gleichung berechnet wird:

$$corr2(j) = \frac{\sum_{i=0}^{LM-1} P1(i) \cdot P3(i + j)}{\sum_{i=0}^{LM-1} P1^2(i)}$$

wobei:

i einen Abtastaugenblick im Rechenzeitfenster der Dauer LM bedeutet, j einen Verzögerungswert zwischen dem Eingangssignal X2n und dem Signal Y3n bedeutet; und
P1 (t) und P3(t) eine Schätzung in einem betrachteten Zeitpunkt t der Leistung des Eingangssignals X2n bzw. derjenigen des Signals Y3n bedeuten.

15. Vorrichtung nach Anspruch 14, **dadurch gekennzeichnet, dass** die erste Kopplungsvariable COR2 mit dem maximalen Wert Maxcor2 der Korrelationswerte corr2(j) gemäß der folgenden Gleichung verbunden ist:

$$COR2 = \frac{k}{Maxcor2}$$

wobei k eine positive Konstante ist.

16. Echounterdrückungsvorrichtung nach einem der Ansprüche 10 bis 15, **dadurch gekennzeichnet, dass** die Mittel zur Berechnung des Anpassungsschritts außerdem Mittel (30a) zur Berechnung einer zweiten Kopplungsvariablen COR aufweisen, die für die akustische Kopplung zwischen dem Eingangssignal X2n des Echoerzeugersystems (26) und dem Ausgangssignal Y1n repräsentativ ist, wobei die zweite Kopplungsvariable COR durch eine Korrelationsrechnung zwischen dem Eingangsignal X2n und dem Ausgangssignal Y1n erhalten wird; wobei der Anpassungsschritt $\mu_n$ des Identifikationsfilters außerdem in Abhängigkeit von der zweiten Kopplungsvariablen COR berechnet wird.

17. Echounterdrückungsvorrichtung nach Anspruch 16, **dadurch gekennzeichnet, dass** die zweite Kopplungsvariable COR ausgehend von einer Hüllkurven-Korrelationsrechnung zwischen dem Eingangssignal X2n und dem Ausgangssignal Y1n erhalten wird.

18. Echounterdrückungsvorrichtung nach Anspruch 17, **dadurch gekennzeichnet, dass** die zweite Kopplungsvariable COR eine Funktion des maximalen Werts Maxcor, von Korrelationswerten corr(j) zwischen dem Eingangssignal X2n und dem Ausgangssignal Y1n ist, wobei die Korrelationswerte corr(j) in einem betrachteten Zeitfenster berechnet werden, wobei jeder von ihnen gemäß der folgenden Gleichung erhalten wird:

$$corr(j) = \frac{\sum_{i=0}^{LM-1} P1(i) \cdot P2(i + j)}{\sum_{i=0}^{LM-1} P1^2(i)}$$

wobei: i einen Abtastaugenblick im Rechenzeitfenster der Dauer LM bedeutet; j einen Verzögerungswert zwischen dem Eingangssignal X2n und dem Ausgangssignal Y1n bedeutet; und P1(t) und P2(t) eine Schätzung in einem betrachteten Zeitpunkt t der Leistung des Eingangssignals X2n bzw. des Ausgangssignals Y1n bedeuten.

**19.** Echounterdrückungsvorrichtung nach Anspruch 16, 17 oder 18, **dadurch gekennzeichnet, dass** der Anpassungsschritt $\mu_n$ gemäß der folgenden Gleichung berechnet wird:

$$\mu_n = \frac{COR}{COR2} \cdot \frac{P1n}{\alpha \cdot P1n + COR2 \cdot P3n}$$

wobei $\alpha$ eine positive Konstante ist und P1n und P3n eine Schätzung im betrachteten Zeitpunkt der Leistung des Eingangssignals X2n bzw. der Leistung des vom Echoerzeugersystem stammenden Signals Y3n bezeichnen.

**20.** Echoverarbeitungsvorrichtung nach Anspruch 9, bei der die Echounterdrückungsvorrichtung wie in einem der Ansprüche 10 bis 15 beansprucht ist; wobei der Anpassungsschritt $\mu_n$ des Identifikationsfilters (42) in Abhängigkeit von der geschätzten Leistung P1n des direkten Signals X1n oder des Eingangssignals X2n, der geschätzten Leistung P3n des vom Echoerzeugersystem (26) stammenden Signals Y3n und von der Kopplungsvariablen COR2 berechnet wird.

**21.** Echoverarbeitungsvorrichtung nach Anspruch 9, bei der die Echounterdrückungsvorrichtung wie in einem der Ansprüche 16 bis 19 beansprucht ist; wobei der Anpassungsschritt $\mu_n$ des Anpassungsfilters (42) in Abhängigkeit von der geschätzten Leistung P1n des direkten Signals X1n oder des Eingangssignals X2n, der geschätzten Leistung P3n des vom Echoerzeugersystem (26) stammenden Signals Y3n und den Kopplungsvariablen COR, COR2 berechnet wird.

**22.** Echoverarbeitungsvorrichtung für ein Mehrkanal-Kommunikationssystem mit mehreren N Empfangskanälen, wobei N eine ganze Zahl größer als oder gleich 2 ist, und mit mehreren M Sendekanälen, wobei M eine ganze Zahl größer als oder gleich 1 ist; wobei jeder, i, der N Empfangskanäle einen Ausgangswandler (HPi) aufweist, der als Reaktion auf ein von einem direkten Signal X1n(i) stammendes Eingangssignal X2n(i) eine Schalldruckwelle erzeugt; wobei jeder, j, der M Sendekanäle einen Eingangswandler (MCj) aufweist, der eine Schalldruckwelle in ein Ausgangssignal Y1n(j) umwandelt; wobei die Echoverarbeitungsvorrichtung dazu bestimmt ist, in jedem Ausgangssignal Y1n(j) Echokomponenten zu dämpfen, die von allen oder einem Teil der N Eingangssignale X2n(i) kommen und aus der akustischen Kopplung resultieren, die zwischen dem Eingangswandler des betrachteten Sendekanals und allen oder einem Teil der M Ausgangswandler vorhanden ist, wobei die Vorrichtung **dadurch gekennzeichnet ist, dass** sie Folgendes aufweist:

- Mittel zur Berechnung der Verstärkung in der Empfangsrichtung $Gr_n(i)$ und von Verstärkungen in der Senderichtung $Ge_n(j)$:
- Mittel zum Anlegen von Verstärkungen in der Empfangsrichtung, um eine Verstärkung in der Empfangsrichtung $Gr_n(i)$ an jedes direkte Signal X1n(i) anzulegen und das entsprechende Eingangssignal X2n(i) zu erzeugen;
- Mittel zum Anlegen von Verstärkungen in der Senderichtung, um eine Verstärkung in der Senderichtung $Ge_n(j)$ an jedes Ausgangssignal Y1n(j) anzulegen und ein entsprechendes Rückwärtssignal Y2n(j) zu erzeugen;
- Mittel zur Berechnung, für jeden Sendekanal j, von N Kopplungsvariablen COR(j,i), wobei i von 1 bis N variiert, von denen jede für die akustische Kopplung repräsentativ ist, die zwischen dem Ausgangssignal Y1n (j) des Sendekanals und einem der N Eingangssignale X2n(i) vorhanden ist;

wobei die Verstärkungsberechnungsmittel in der Lage sind, jede Verstärkung in der Empfangsrichtung $Gr_n(i)$ und jede Verstärkung in der Senderichtung $Ge_n(j)$ auf der Basis der N Kopplungsvariablen COR(j,i) zu berechnen, die für den zugeordneten Sendekanal j berechnet wurden.

**23.** Vorrichtung nach Anspruch 22, **dadurch gekennzeichnet, dass** sie Mittel zur Schätzung der Augenblicksleistung $P1n_i$ jedes Eingangssignals X2n(i) und derjenigen $P2n_j$ jedes Ausgangssignals Y1n(j) aufweist, wobei die Verstärkungsberechnungsmittel in der Senderichtung in der Lage sind, jede Verstärkung in der Senderichtung $Ge_n(j)$ auf der Basis von N Variablen G(j,i) zu berechnen, wobei i von 1 bis N variiert, von denen jede in Abhängigkeit von den geschätzten Leistungen eines Eingangssignals X2n(i) und des Ausgangssignals Y1n (j) des betrachteten Sendekanals und in Abhängigkeit von der entsprechenden Kopplungsvariablen COR(j,i) bestimmt wird, wobei jede der Variablen G(j,i) gemäß der folgenden Gleichung erhalten wird:

$$G(j, i) = \frac{P2n_j}{P2n_j + COR(j, i) \cdot P1n_i}$$

wobei $P1n_i$ und $P2n_j$ eine Schätzung im betrachteten Augenblick der Leistung des betrachteten Eingangssignals X2n(i) bzw. des betrachteten Ausgangssignals Y1n(j) bezeichnen.

24. Vorrichtung nach Anspruch 23, **dadurch gekennzeichnet, dass** jede Verstärkung in der Senderichtung $Ge_n(j)$ ausgehend vom minimalen Wert der N Variablen G(j,i), wobei i von 1 bis N variiert, bestimmt wird, die für den zugeordneten Sendekanal j berechnet wurden.

25. Vorrichtung nach Anspruch 24, **dadurch gekennzeichnet, dass** jede Verstärkung in der Senderichtung $Ge_n(j)$ gemäß der folgenden Gleichung bestimmt wird:

$$Ge_n(j) = \gamma \cdot Ge_{n-1}(j) + (1 - \gamma) \cdot \min_i(G(j,i))$$

wobei $Ge_{n-1}(j)$ den Wert der Verstärkung in der Senderichtung des Sendekanals j im vorhergehenden Berechnungsaugenblick bezeichnet, $\gamma$ eine positive Konstante kleiner als 1 bezeichnet und $\min_i(G(j,i))$ den kleinsten Wert der N Variablen G(j,i) bezeichnet, wobei i von 1 bis N variiert.

26. Vorrichtung nach Anspruch 25, **dadurch gekennzeichnet, dass** alle Verstärkungen in der Empfangsrichtung $Gr_n(i)$ den gleichen Wert haben, der gemäß der folgenden Gleichung bestimmt wird:

$$Gr_n(i) = 1 - \delta \cdot \max_j(Ge_n(j))$$

wobei $\delta$ eine positive Konstante kleiner als 1 bezeichnet und $\max_j(Ge_n(J))$ den maximalen Wert der M Verstärkungen in der Senderichtung $Ge_n(j)$ bezeichnet, wobei j von 1 bis M variiert.

27. Vorrichtung nach einem der Ansprüche 22 bis 25, **dadurch gekennzeichnet, dass** jede der Verstärkungen in der Empfangsrichtung $Gr_n(i)$ gleich 1 ist.

28. Vorrichtung nach einem der Ansprüche 22 bis 27, **dadurch gekennzeichnet, dass** jede Kopplungsvariable COR (j,i) ausgehend von einer Korrelationsrechnung zwischen dem entsprechenden Ausgangssignal Y1n(j) und dem entsprechenden Eingangssignal X2n(i) erhalten wird.

29. Vorrichtung nach Anspruch 28, **dadurch gekennzeichnet, dass** die Korrelationsrechnung zwischen einem Ausgangssignal Y1n(j) und einem Eingangssignal X2n(i) eine Hüllkurven-Korrelationsrechnung ist.

30. Vorrichtung nach Anspruch 29, **dadurch gekennzeichnet, dass** gemäß der Hüllkurven-Korrelationsrechnung jede Kopplungsvariable COR(j,i) eine Funktion des maximalen Werts, Maxcor, von Korrelationswerten $corr_{ji}(d)$ zwischen dem Ausgangssignal Y1n(j) und dem Eingangssignal X2n(i) ist, wobei die Korrelationswerte $corr_{ji}(d)$ in einem vordefinierten Zeitfenster berechnet werden, wobei jeder von ihnen gemäß der folgenden Gleichung erhalten wird:

$$corr_{ji}(d) = \frac{\sum_{c=0}^{LM-1} P1n_i(c) \cdot P2n_j(c + d)}{\sum_{c=0}^{LM-1} P1n_i^2(c)}$$

wobei: c einen Abtastaugenblick im Rechenzeitfenster der Dauer LM bedeutet, d einen Verzögerungswert zwischen dem Eingangssignal X2n(i) und dem Ausgangssignal Y1n(j) bedeutet; und $P1n_i(t)$ und $P2n_j(t)$ jeweils eine Schätzung in einem betrachteten Zeitpunkt t der Leistung des Eingangssignals X2n(1) und des Ausgangssignals Y1n(j) bedeuten.

31. Echounterdrückungsvorrichtung für ein Mehrkanal-Kommunikationssystem mit mehreren N Empfangskanälen, wobei N eine ganze Zahl größer als oder gleich 2 ist, und mit mehreren M Sendekanälen, wobei M eine ganze Zahl größer als oder gleich 1 ist; wobei jeder, i, der N Empfangskanäle einen Ausgangswandler (HPi) aufweist, der als Reaktion auf ein Eingangssignal X2n(i) eine Schalldruckwelle erzeugt; wobei jeder, j, der M Sendekanäle einen Eingangswandler (MCj) aufweist, der eine Schalldruckwelle in ein Ausgangssignal Y1n (j) umwandelt; wobei die Vorrichtung Folgendes aufweist:

   - für jeden Sendekanal j, N Identifikationsfilter Fij mit variablen Koeffizienten, um die akustische Kopplung zwischen jedem der N Ausgangswandler (HPi) und dem Eingangswandler (MCj) des Sendekanals j zu schätzen, und
   - für jedes Filter Fij, Mittel zur Anpassung der Koeffizienten des Filters in Abhängigkeit von einem Anpassungsschritt $\mu_n(i,j)$, und Mittel zur Berechnung des Anpassungsschritts $\mu_n(i,j)$;

   wobei die Vorrichtung **dadurch gekennzeichnet ist, dass** sie Folgendes aufweist:

   - Mittel zur Schätzung der Augenblicksleistung $P1n_i$ jedes Eingangssignals X2n(i) und derjenigen $P2n_j$ jedes Ausgangssignals Y1n(j);
   - Mittel zur Berechnung, für jeden Sendekanal j, von N Kopplungsvariablen COR(j,i), wobei i von 1 bis N variiert, von denen jede für die akustische Kopplung charakteristisch ist, die zwischen dem Ausgangssignal Y1n (j) des Sendekanals und einem der N Eingangssignale X2n(i) vorhanden ist;

   wobei die Mittel zur Berechnung des Anpassungsschritts $\mu_n(i,j)$ für ein Filter Fij, das einem Empfangskanal i und einem Sendekanal j zugeordnet ist, in der Lage sind, den Anpassungsschritt $\mu_n(i,j)$ in Abhängigkeit von den geschätzten Leistungen $P1n_i$, wobei i von 1 bis N variiert, für die N Empfangskanäle, von der geschätzten Leistung $P2n_j$ für den Sendekanal j, und in Abhängigkeit von den N Kopplungsvariablen COR(j,i) zu berechnen, wobei i von 1 bis N variiert, die dem Sendekanal j zugeordnet sind.

32. Vorrichtung nach Anspruch 31, **dadurch gekennzeichnet, dass** ein Anpassungsschritt $\mu_n(i,j)$ für ein Filter Fij, das einem Empfangskanal i und einem Sendekanal j zugeordnet ist, gemäß der folgenden Gleichung erhalten wird:

$$\mu_n(i, j) = \frac{P1n_i}{b_i \cdot P1n_i + COR(j, i) \cdot P2n_j + \sum_{k \neq i} COR(j, k) \cdot P1n_k}$$

   wobei $b_i$ eine positive Konstante ist.

33. Vorrichtung nach Anspruch 31 oder 32, **dadurch gekennzeichnet, dass** eine Kopplungsvariable COR(j,i) ausgehend von einer Korrelationsrechnung zwischen dem Ausgangssignal Y1n(j) und dem Eingangssignal X2n(i) erhalten wird.

34. Vorrichtung nach Anspruch 33, **dadurch gekennzeichnet, dass** die Korrelationsrechnung zwischen dem Ausgangssignal Y1n(j) und dem Eingangssignal X2n(i) eine Hüllkurven-Korrelationsrechnung ist.

35. Vorrichtung nach Anspruch 34, **dadurch gekennzeichnet, dass** eine Kopplungsvariable COR(j,i) eine Funktion des maximalen Werts, Maxcor(j,i), der Korrelationswerte $corr_{ji}(d)$ ist, die in einem betrachteten Zeitfenster berechnet werden, wobei jeder der Korrelationswerte $corr_{ji}(d)$ gemäß der folgenden Gleichung berechnet wird:

$$corr_{ji}(d) = \frac{\sum\limits_{c=0}^{LM-1} P1n_i(c) \cdot P2n_j(c + d)}{\sum\limits_{c=0}^{LM-1} P1n_i^2(c)}$$

wobei:

c einen Abtastaugenblick im Rechenzeitfenster der Dauer LM bedeutet, d einen Verzögerungswert zwischen dem Eingangssignal X2n(i) und dem Ausgangssignal Y1n (j) bedeutet; und $P1n_i(t)$ und $P2n_j(t)$ eine Schätzung in einem betrachteten Zeitpunkt t der Leistung des Eingangssignals X2n(i) bzw. des Ausgangssignals Y1n (j) bedeuten.

36. Vorrichtung nach Anspruch 35, **dadurch gekennzeichnet, dass** die Kopplungsvariable COR(j,i) mit dem maximalen Wert Maxcor(j,i) der Korrelationswerte $corr_{ji}$(d) gemäß der folgenden Gleichung verbunden ist:

$$COR(j, i) = \frac{k}{Maxcor(j, i)}$$

wobei k eine positive Konstante ist.

37. Vorrichtung nach einem der Ansprüche 31 bis 36, bei der jedes Filter Fij, das einem Empfangskanal i und einem Sendekanal j zugeordnet ist, ein Filtersignal erzeugt, das vom Ausgangssignal Y1n(j) subtrahiert wird, um ein gefiltertes Signal Y2n(j) zu liefern,
**dadurch gekennzeichnet, dass** sie außerdem Mittel zur Berechnung, für jeden Sendekanal j, von N zweiten Kopplungsvariablen COR2(j,i) aufweist,
wobei i von 1 bis N variiert, von denen jede für die akustische Kopplung charakteristisch ist, die zwischen dem gefilterten Signal Y2n(j) des Sendekanals und einem der N Eingangssignale X2n(i) vorhanden ist; wobei der Anpassungsschritt $\mu_n$(i,j) eines Identifikationsfilters Fij, das einem Empfangskanal i und einem Sendekanal j zugeordnet ist, außerdem in Abhängigkeit von den N zweiten Kopplungsvariablen COR2(j,i) berechnet wird.

38. Vorrichtung nach Anspruch 37, **dadurch gekennzeichnet, dass** ein Anpassungsschritt $\mu_n$(i,j) für ein Filter Fij, das einem Empfangskanal i und einem Sendekanal j zugeordnet ist, gemäß der folgenden Gleichung erhalten wird:

$$\mu_n(i, j) = \frac{COR(j, i)}{COR2(j, i)} \cdot \frac{P1n_i}{b_i \cdot P1n_i + COR(j, i) \cdot P2n_j + \sum\limits_{k \neq i} COR(j, k) \cdot P1n_k}$$

wobei $b_i$ eine positive Konstante ist.

39. Vorrichtung nach Anspruch 37 oder 38, **dadurch gekennzeichnet, dass** sie außerdem für jedes Paar von Empfangskanälen i und Sendekanälen j Mittel zum Anlegen von Verstärkungen aufweist, um eine Verstärkung in der Empfangsrichtung $Gr_n$(i) an das Eingangssignal X2n(i) und eine Verstärkung in der Senderichtung $Ge_n$(j) an das gefilterte Signal Y2n(j) anzulegen; wobei die Verstärkungen $Gr_n$(i), $Ge_n$(j) auf der Basis der N zweiten Kopplungsvariablen COR2(j,i) berechnet werden, die für den Sendekanal j bestimmt sind.

*FIG. 1*

**FIG. 2**

EP 1 518 394 B1

*FIG. 3*

**FIG. 4**

EP 1 518 394 B1

*FIG. 5*

**FIG. 6**

*FIG. 7*